# EUROPÄISCHE PATENTANMELDUNG

(11) **EP 4 850 970 A1**
(43) Veröffentlichungstag der Anmeldung: **09.12.2026**
(21) Anmeldenummer: 26180459.5
(22) Anmeldetag: 22.05.2026
(51) Int. Cl.: B60L 53/18, B60L 53/16, B60L 53/302, H01B 7/42, H01R 13/00

(54) **ANSCHLUSSELEMENT FÜR DIREKT GEKÜHLTE LADELEITUNGEN**

(30) Priorität: 06.06.2025 EP 25181285
(71) Anmelder: LEONI Kabel GmbH, 91154 Roth (DE)
(72) Erfinder: Goß, Sebastian, 91154 Roth (DE)
(74) Vertreter: Frenkel, Matthias Alexander

(57) **Zusammenfassung**

Die Erfindung bezieht sich auf eine Anschlussvorrichtung für ein elektrisches Ladekabel sowie auf ein elektrisches Ladekabel, insbesondere für Elektrofahrzeuge, mit einer solchen Anschlussvorrichtung. Ein Ausführungsbeispiel der Anschlussvorrichtung weist auf: einen ersten Verbindungsabschnitt (1100) zur, insbesondere unmittelbaren und/oder fluiddichten, Verbindung mit einem ersten Kühlschlauch (40) des elektrischen Ladekabels (100); und mindestens einen von dem ersten Verbindungsabschnitt (1100) in einer ersten Richtung vorstehenden Kupplungsabschnitt (1200), wobei der mindestens eine Kupplungsabschnitt (1200) ausgebildet ist, in dem ersten Kühlschlauch (40) zumindest abschnittsweise aufgenommen zu werden.

## Beschreibung

Die Erfindung betrifft eine Anschlussvorrichtung für ein elektrisches Ladekabel sowie ein elektrisches Ladekabel, insbesondere für Elektrofahrzeuge, mit einer solchen Anschlussvorrichtung.

Elektrofahrzeuge werden für gewöhnlich an Ladestationen mit Hilfe von Ladekabeln geladen. Solche Ladekabel sind normalerweise an ihrem einen Ende mit einer Ladestation / Ladesäule verbunden und können für den Ladevorgang über einen Stecker mit einem Elektrofahrzeug verbunden werden. Die maximale Ladeleistung zum Laden eines Elektrofahrzeugs (Elektroautos) hängt von mehreren Faktoren ab, wie beispielsweise der Ladeleistung des Elektroautos und der Ladestation. Außer Elektrofahrzeug und Ladestation gibt es weitere Einflussfaktoren für die maximale Ladeleistung, wie z.B. die Temperatur und den Ladestand der Batterie.

Daneben spielt für die Ladeleistung und damit die Dauer des Ladevorgangs auch die Temperatur des Ladekabels eine Rolle. Generell führen Ladesysteme für hohe Ladeleistung zu starker Erwärmung. Insbesondere bei Ladekabeln mit kleineren Querschnitten kann es zu Problemen kommen. Normalerweise würden die kleineren Querschnitte nicht die nötige Leistung übertragen können, weil sie sich durch die Strombelastung zu schnell erwärmen würden. Dies könnte zur Überschreitung der maximal zulässigen Leitertemperatur nach EN 50620 oder IEC 62893 nach einer bestimmten Zeit führen. Der Ladevorgang müsste womöglich unterbrochen oder abgebrochen werden. Ferner werden die Leitungen in ihrer Lebensdauer geschädigt.

Darüber hinaus könnte ebenfalls die Oberflächentemperatur der Ladeleitung über den Grenzwert der IEC 117 steigen und ggf. zu Verletzungen des Anwenders bei Berührung/Handhabung des Ladekabels führen. Die beim Laden auftretende Wärmeenergie muss daher beispielsweise mit Hilfe einer Kühlleitung abgeführt werden. Heutzutage werden bei gekühlten Ladeleitungen oder Ladekabeln Schläuche, sogenannte Kühlschläuche, verwendet, um in der Ladeleitung oder dem Ladekabel ein Kühlmedium zum Kühlen eines oder mehrerer elektrischer Leiter zu transportieren. Hierbei werden grundsätzlich zwei unterschiedliche Ansätze unterschieden. Bei einer direkten Kühlung stehen die leitfähigen Elemente in direktem Kontakt mit einem Kühlmedium. Bei einer indirekten Kühlung sind die leitfähigen Elemente um einen Kühlschlauch herum, insbesondere verseilt, angeordnet und stehen daher nicht in direktem Kontakt mit dem Kühlmedium. Die vorliegende Erfindung adressiert in dem ersten Ansatz (direkte Kühlung) auftretende Probleme.

Heutige Ladekabel weisen oftmals vier solcher Kühlschläuche auf, wobei zwei dieser Kühlschläuche als Hinleitungen für das Kühlfluid und zwei dieser Kühlschläuche als Rückleitungen für das Kühlfluid dienen. Dies hat den Vorteil, dass die jeweiligen leitfähigen Elemente einen eigenen, ihnen zugeordneten Kühlschlauch haben. In diesem Fall kann das Kühlmedium durch einen Kühlschlauch in einer Richtung und anschließend durch den entsprechenden Kühlschlauch mit dem darin angeordneten leitfähigen Element in der entgegengesetzten Richtung transportiert werden. Mit anderen Worten, bilden jeweils ein Kühlschlauch mit darin angeordnetem leitfähigem Element und ein Kühlschlauch ohne ein solches leitfähiges Element einen Vor- bzw. Rücklauf für das Kühlmedium. Dadurch haben die jeweiligen leitfähigen Elemente eine Isolationsstrecke von zumindest zwei Kabellängen.

In einigen Ladekabeln sollen an Stelle von vier Kühlschläuchen lediglich drei Kühlschläuche vorgesehen werden. Hierbei teilen sich die beiden Kühlschläuche mit darin angeordnetem leitfähigem Element einen gemeinsamen (leeren) Kühlschlauch als Vor- oder Rücklauf für das Kühlmedium. Dies reduziert u. a. den Materialaufwand. Problematisch hierbei ist jedoch, dass die sogenannte Isolationsstrecke, d. h. der Abstand zwischen stromführenden Elementen in dem Ladekabel, bei der Verwendung von drei Kühlschläuchen deutlich niedriger ist als bei der Verwendung von vier Kühlschläuchen, denn hierbei sind die beiden Kühlschläuche mit darin angeordnetem leitfähigem Element letztlich über den gemeinsam genutzten Kühlschlauch als Vor- oder Rücklauf miteinander verbunden. Bei der Verwendung von drei Kühlschläuchen ist diese Isolationsstrecke daher für einige Anwendungen zu kurz.

Daher besteht ein Bedarf, eine Anschlussvorrichtung für ein elektrisches Ladekabel und ein elektrisches Ladekabel mit einer solchen Anschlussvorrichtung bereitzustellen, welche zu einem elektrischen Ladekabel mit verbesserten Eigenschaften, insbesondere einer längeren Isolationsstrecke, führen. Insbesondere besteht ein Bedarf, eine Anschlussvorrichtung für ein elektrisches Ladekabel mit genau drei Kühlschläuchen sowie ein solches elektrisches Ladekabel mit einer derartigen Anschlussvorrichtung bereitzustellen, welche eine optimierte Isolationsstrecke ermöglichen.

Die Aufgabe wird durch eine Anschlussvorrichtung mit den Merkmalen des Anspruchs 1 sowie ein Ladekabel mit den Merkmalen des Anspruchs 9 gelöst.

Gemäß einem ersten Aspekt der Erfindung wird eine Anschlussvorrichtung für ein elektrisches Ladekabel vorgeschlagen. Das elektrische Ladekabel kann beispielsweise als ein elektrisches Ladekabel für Elektrofahrzeuge ausgebildet sein. Insbesondere kann es sich um ein elektrisches Ladekabel handeln, das einen ersten Kühlschlauch, in dem kein elektrischer Leiter angeordnet ist, und zwei zweite Kühlschläuche aufweist, in denen jeweils ein elektrischer Leiter angeordnet ist. Ferner kann das elektrische Ladekabel noch weitere Komponenten, beispielsweise einen Schutzleiter, einen Außenmantel, zusätzliche Steuerleitungen oder/und Füllelemente umfassen.

Die Anschlussvorrichtung weist einen ersten Verbindungsabschnitt auf. Der erste Verbindungsabschnitt dient zu einer Verbindung mit einem ersten Kühlschlauch des elektrischen Ladekabels. Anders ausgedrückt, der erste Verbindungsabschnitt ist ausgebildet, mit einem ersten Kühlschlauch des elektrischen Ladekabels verbunden zu werden. Der erste Verbindungsabschnitt kann insbesondere zu einer unmittelbaren und/oder fluiddichten Verbindung mit dem ersten Kühlschlauch des elektrischen Ladekabels dienen oder ausgebildet sein. Die Anschlussvorrichtung weist mindestens einen von dem ersten Verbindungsabschnitt in einer ersten Richtung vorstehenden Kupplungsabschnitt auf. Der mindestens eine Kupplungsabschnitt ist ausgebildet, in dem ersten Kühlschlauch zumindest abschnittsweise aufgenommen zu werden, insbesondere in den ersten Kühlschlauch hineinzuragen.

Man könnte also sagen, dass der Kupplungsabschnitt dazu ausgebildet ist, in den Kühlschlauch zumindest abschnittsweise aufgenommen zu werden bzw. insbesondere in den Kühlschlauch hineinzuragen, zu dem der erste Verbindungsabschnitt bestimmungsgemäß eine Verbindung herstellen soll.

Die Anschlussvorrichtung kann aus einem nicht leitfähigen Material gebildet oder gefertigt sein oder aus einem nicht leitfähigen Material bestehen. Dieses dient der besseren Isolation der beiden elektrischen Leiter, die sich in jeweils einem der beiden zweiten Kühlschläuche befinden können. Insbesondere kann die Anschlussvorrichtung aus einem Kunststoff gebildet oder gefertigt sein oder aus einem Kunststoff bestehen. Hierdurch kann die Struktur des Anschlusselements besonders einfach und kostengünstig (z.B. durch Spritzgussverfahren) hergestellt werden. Es können Kunststoffe mit einer hohen Temperaturbeständigkeit zum Einsatz kommen. Die Kunststoffe können einen Schmelzpunkt von über 150° C, insbesondere von über 200°C, beispielsweise von über 250°C aufweisen. Beispielsweise können Kunststoffe wie Polytetrafluorethylen (PTFE), Polyetheretherketon (PEEK), Polyamid (PA) oder Polyphenylensulfid (PPS) zum Einsatz kommen. Es sind aber auch andere Kunststoffe oder andere nichtleitende Materialien möglich.

Die Begriffe nicht leitfähig und nichtleitend / nicht leitend können hierin als einander entsprechend oder äquivalent verstanden werden.

Anders ausgedrückt, in einem Zustand, in dem der erste Verbindungsabschnitt mit dem ersten Kühlschlauch verbunden ist, ist der mindestens eine Kupplungsabschnitt in dem ersten Kühlschlauch zumindest abschnittsweise aufgenommen. In dem Zustand, in dem der erste Verbindungsabschnitt mit dem ersten Kühlschlauch verbunden ist, kann der mindestens eine Kupplungsabschnitt in den ersten Kühlschlauch hineinragen.

Der mindestens eine Kupplungsabschnitt kann ausgebildet sein, in dem ersten Kühlschlauch aufgenommenes und/oder geführtes Kühlmedium in die Anschlussvorrichtung aufzunehmen (einzukoppeln) oder Kühlmedium in den ersten Kühlschlauch abzugeben (auszukoppeln). Der Kupplungsabschnitt kann hierzu zwei Enden aufweisen. Das erste Ende kann sich entgegen der ersten Richtung erstrecken. Mit dem ersten Ende kann der Kupplungsabschnitt direkt oder indirekt (mit dazwischenliegenden Zwischenbauteilen) an dem/den Verbindungsabschnitt angrenzen. Mit einem zweiten Ende kann sich der Kupplungsabschnitt in der ersten Richtung erstrecken.

In einem Zustand, in dem der erste Verbindungsabschnitt mit dem ersten Kühlschlauch verbunden ist, würde das zweite Ende in den ersten Kühlschlauch hineinragen und/oder in diesen aufgenommen werden. Das Aufnehmen (Einkoppeln) oder Abgeben (Auskoppeln) eines Kühlmediums in/von dem ersten Kühlschlauch kann hierbei über das zweite Ende erfolgen. Dieses kann somit auch als offenes Ende bezeichnet werden. Man könnte also sagen, dass sich das offene Ende in den ersten Kühlschlauch erstreckt, in diesen hineinragt und/oder in diesen aufgenommen werden kann.

Gemäß einem ersten Beispiel kann der mindestens eine Kupplungsabschnitt ausgebildet sein, mit mindestens einem Schlauchelement gekoppelt oder verbunden zu sein oder zu werden. Bei dem mindestens einen Schlauchelement handelt es sich nicht um den Kühlschlauch selbst, sondern um ein von dem Kühlschlauch separates oder getrenntes Element. Das mindestens eine Schlauchelement kann aus einem anderen Material als der erste Kühlschlauch oder/und der Kupplungsabschnitt gefertigt sein. Das mindestens eine Schlauchelement kann ausgebildet sein, in dem ersten Kühlschlauch zumindest abschnittsweise aufgenommen zu werden. Durch die Länge des mindestens einen Schlauchelements kann die Isolationsstrecke weiter erhöht werden. Das mindestens eine Schlauchelement kann dazu ausgebildet sein, das Kühlmedium in dem ersten Kühlschlauch aufzuteilen. Insbesondere kann das mindestens eine Schlauchelement dazu eingerichtet sein, einen Teil des Kühlmediums auszukoppeln oder einen Teil des Kühlmediums in den Kühlschlauch einzukoppeln. Beispielsweise kann das mindestens eine Schlauchelement dazu eingerichtet sein, einen Teil des Kühlmediums, der für einen der zweiten Kühlschläuche bestimmt ist, aus dem Kühlschlauch auszukoppeln oder einen Teil des Kühlmediums, der von einem der zweiten Kühlschläuche stammt, in den ersten Kühlschlauch einzukoppeln.

Gemäß einem zweiten Beispiel kann der mindestens eine Kupplungsabschnitt ausgebildet sein, mit mindestens einem Schlauchelement integral oder einstückig gebildet oder verbunden zu sein oder zu werden. Das mindestens eine Schlauchelement ist ausgebildet, in dem ersten Kühlschlauch zumindest abschnittsweise aufgenommen zu werden.

Das mindestens eine Schlauchelement kann in einem mit dem mindestens einen Kupplungsabschnitt gekoppelten oder verbundenen Zustand (erstes Beispiel) oder in einem mit dem mindestens einen Kupplungsabschnitt integral oder einstückig gebildeten oder verbundenen Zustand (zweites Beispiel) in der ersten Richtung von dem mindestens einen Kupplungsabschnitt vorstehen. Das mindestens eine Schlauchelement kann insbesondere ausgebildet sein, in einem Zustand, in dem das mindestens eine Schlauchelement mit dem mindestens einen Kupplungsabschnitt gekoppelt oder verbunden ist (erstes Beispiel) oder mit dem mindestens einen Kupplungsabschnitt integral oder einstückig gebildet oder verbunden ist (zweites Beispiel), in den ersten Kühlschlauch hineinzuragen. Anders ausgedrückt, das mindestens eine Schlauchelement kann insbesondere ausgebildet sein, in den ersten Kühlschlauch hineinzuragen, wenn das mindestens eine Schlauchelement mit dem mindestens einen Kupplungsabschnitt gekoppelt oder verbunden ist oder mit dem mindestens einen Kupplungsabschnitt integral oder einstückig gebildet oder verbunden ist.

Die Anschlussvorrichtung kann zu einem Anschluss an einen ersten Kühlschlauch dienen. Ist das mindestens eine Schlauchelement in dem ersten Kühlschlauch aufgenommen, kann dies zu einer Verlängerung der Isolationsstrecke im Vergleich zu einer Ausgestaltung ohne die Anschlussvorrichtung führen. Wenn es sich um ein elektrisches Ladekabel der o.g. Konfiguration (einen ersten Kühlschlauch ohne elektrischen Leiter (leerer Kühlschlauch) und zwei zweite Kühlschläuche mit elektrischen Leitern) handelt, kann die Anschlussvorrichtung dazu eingerichtet sein, mit dem ersten Kühlschlauch/leeren Kühlschlauch kontaktiert zu werden. In diesem Fall würde, in einem Zustand, in dem der erste Verbindungsabschnitt mit dem ersten Kühlschlauch verbunden ist, der erste Kupplungsabschnitt in den gleichen ersten Kühlschlauch/leeren Kühlschlauch hineinragen bzw. in dem gleichen ersten Kühlschlauch/leeren Kühlschlauch zumindest abschnittsweise aufgenommen sein.

Zudem kann das mindestens eine in dem ersten Kühlschlauch aufgenommene Schlauchelement den ersten Kühlschlauch zumindest abschnittsweise stabilisieren. Insbesondere in einem Abschnitt/Bereich, in dem das mindestens eine Schlauchelement in dem ersten Kühlschlauch aufgenommen ist, kann es zu einer Stabilisierung des ersten Kühlschlauchs kommen.

Der erste Verbindungsabschnitt kann zumindest nahezu zylinderförmig sein. Der erste Verbindungsabschnitt kann beispielsweise eine im Querschnitt runde, z. B. zumindest nahezu kreisförmige, Form haben. Der mindestens eine Kupplungsabschnitt kann zumindest nahezu zylinderförmig sein. Der mindestens eine Kupplungsabschnitt kann beispielsweise eine im Querschnitt runde, z. B. zumindest nahezu kreisförmige, Form haben. Der Umfang oder Durchmesser des mindestens einen Kupplungsabschnitts kann insbesondere kleiner sein als der Umfang bzw. Durchmesser des ersten Verbindungsabschnitts.

Ein Durchmesser und/oder Umfang des ersten Verbindungsabschnitts kann auf einen Durchmesser und/oder Umfang des ersten Kühlschlauchs abgestimmt sein. Beispielsweise kann ein Durchmesser und/oder Umfang des ersten Verbindungsabschnitts zumindest nahezu genau einem Durchmesser und/oder Umfang des ersten Kühlschlauchs entsprechen.

Beispielsweise kann ein Außenumfang des ersten Verbindungsabschnitts zumindest nahezu genau einem Innenumfang des ersten Kühlschlauchs entsprechen oder minimal kleiner sein. In diesem Fall kann die Verbindung zwischen dem ersten Verbindungsabschnitt und dem ersten Kühlschlauch hergestellt werden, indem der erste Verbindungsabschnitt zumindest abschnittsweise in den ersten Kühlschlauch eingebracht wird/ist und/oder der erste Kühlschlauch zumindest abschnittsweise auf den ersten Verbindungsabschnitt aufgebracht wird/ist . Auf diese Weise kommt es zu einem in der ersten Richtung wirkenden Reibschluss zwischen dem ersten Verbindungsabschnitt und dem ersten Kühlschlauch und einem Formschluss in radialer Richtung des ersten Verbindungsabschnitts und des ersten Kühlschlauchs. Die Verbindung wird durch den Reibschluss und/oder Formschluss entgegen einer in der ersten Richtung wirkenden Kraft gehalten.

Alternativ kann ein Innenumfang des ersten Verbindungsabschnitts zumindest nahezu genau einem Außenumfang des ersten Kühlschlauchs entsprechen oder minimal größer sein. In diesem Fall kann die Verbindung zwischen dem ersten Verbindungsabschnitt und dem ersten Kühlschlauch hergestellt werden, indem der erste Verbindungsabschnitt zumindest abschnittsweise auf den ersten Kühlschlauch aufgebracht wird/ist und/oder der erste Kühlschlauch zumindest abschnittsweise in den ersten Verbindungsabschnitt eingebracht wird/ist. Auf diese Weise kommt es zu einem in der ersten Richtung wirkenden Reibschluss zwischen dem ersten Verbindungsabschnitt und dem ersten Kühlschlauch und einem Formschluss in radialer Richtung des ersten Verbindungsabschnitts und des ersten Kühlschlauchs. Die Verbindung wird durch den Reibschluss und/oder Formschluss entgegen einer in der ersten Richtung wirkenden Kraft gehalten.

Ein Durchmesser und/oder Umfang des mindestens einen Kupplungsabschnitts kann auf einen Durchmesser und/oder Umfang des mindestens einen Schlauchelements abgestimmt sein. Beispielsweise kann ein Durchmesser und/oder Umfang des mindestens einen Kupplungsabschnitts zumindest nahezu genau einem Durchmesser und/oder Umfang des mindestens einen Schlauchelements entsprechen.

Beispielsweise kann ein Außenumfang des mindestens einen Kupplungsabschnitts zumindest nahezu genau einem Innenumfang des mindestens einen Schlauchelements entsprechen oder minimal kleiner sein. In diesem Fall kann die Verbindung zwischen dem mindestens einen Kupplungsabschnitt und dem mindestens einen Schlauchelement hergestellt werden (erstes Beispiel), indem der mindestens eine Kupplungsabschnitt zumindest abschnittsweise in das mindestens eine Schlauchelement eingebracht wird/ist und/oder das mindestens eine Schlauchelement zumindest abschnittsweise auf den mindestens einen Kupplungsabschnitt aufgebracht wird/ist. Auf diese Weise kommt es zu einem in der ersten Richtung wirkenden Reibschluss zwischen dem mindestens einen Kupplungsabschnitt und dem mindestens einen Schlauchelement und einem Formschluss in radialer Richtung des mindestens einen Kupplungsabschnitts und des mindestens einen Schlauchelements. Die Verbindung wird durch den Reibschluss und/oder Formschluss entgegen einer in der ersten Richtung wirkenden Kraft gehalten.

Alternativ kann ein Innenumfang des mindestens einen Kupplungsabschnitts zumindest nahezu genau einem Außenumfang des mindestens einen Schlauchelements entsprechen oder minimal größer sein. In diesem Fall kann die Verbindung zwischen dem mindestens einen Kupplungsabschnitt und dem mindestens einen Schlauchelement hergestellt werden (erstes Beispiel), indem der mindestens eine Kupplungsabschnitt zumindest abschnittsweise auf das mindestens eine Schlauchelement aufgebracht wird/ist und/oder das mindestens eine Schlauchelement zumindest abschnittsweise in den mindestens einen Kupplungsabschnitt eingebracht wird/ist. Auf diese Weise kommt es zu einem in der ersten Richtung wirkenden Reibschluss zwischen dem mindestens einen Kupplungsabschnitt und dem mindestens einen Schlauchelement und einem Formschluss in radialer Richtung des mindestens einen Kupplungsabschnitts und des mindestens einen Schlauchelements. Die Verbindung wird durch den Reibschluss und/oder Formschluss entgegen einer in der ersten Richtung wirkenden Kraft gehalten.

Eine integrale oder einstückige Verbindung zwischen dem mindestens einen Kupplungsabschnitt und dem mindestens einen Schlauchelement (zweites Beispiel) kann beispielsweise dadurch erreicht oder hergestellt werden, indem der mindestens eine Kupplungsabschnitt und das mindestens eine Schlauchelement miteinander verklebt werden und dadurch ein gemeinsames Element bilden.

Eine integrale oder einstückige Bildung des mindestens einen Kupplungsabschnitts und des mindestens einen Schlauchelements (zweites Beispiel) als gemeinsames Element kann beispielsweise durch ein Spritzgussverfahren erreicht werden, bei dem der mindestens eine Kupplungsabschnitt und das mindestens eine Schlauchelement aus einem gleichen Kunststoff spritzgegossen werden. Alternativ kann eine integrale oder einstückige Bildung des mindestens einen Kupplungsabschnitts und des mindestens einen Schlauchelements (zweites Beispiel) als gemeinsames Element beispielsweise durch ein Mehrkomponenten-Spritzgießen, insbesondere durch einen 2-Komponenten-Spritzguss, erreicht werden, bei dem der mindestens eine Kupplungsabschnitt und das mindestens eine Schlauchelement aus mehreren, insbesondere zwei, verschiedenen Kunststoffen spritzgegossen werden. Wenn für die Anschlussvorrichtung ein nichtleitender Kunststoff verwendet wird, ist die integrale oder einstückige Bildung zwischen Kupplungsabschnitt und dem mindestens einen Schlauchelement besonders vorteilhaft. In diesem Fall kann das gesamte Bauteil, bestehend aus Anschlussvorrichtung und mindestens einem Schlauchelement, aus einem oder verschiedenen Kunststoffen spritzgegossen werden. Hierbei können durch 2-Komponenten- oder Mehrkomponenten-Spritzgussverfahren verschiedene nichtleitende Kunststoffe für den Kupplungs- und den Verbindungsabschnitt sowie für das mindestens eine Schlauchelement eingesetzt werden.

Unabhängig von der genauen Verbindung oder Bildung des mindestens einen Kupplungsabschnitts und des mindestens einen Schlauchelements kann das mindestens eine Schlauchelement flexibler sein, insbesondere aus einem flexibleren Kunststoff gebildet sein, als der mindestens eine Kupplungsabschnitt. Alternativ ist auch eine gleiche Flexibilität, beispielsweise bei Verwendung eines gleichen Kunststoffs, denkbar.

Der erste Verbindungsabschnitt kann mindestens einen Dichtabschnitt aufweisen. Der Dichtabschnitt dient zur Abdichtung des ersten Verbindungsabschnitts gegenüber dem ersten Kühlschlauch und umgekehrt. Auf diese Weise kann eine zumindest nahezu dichte Verbindung zwischen dem ersten Verbindungsabschnitt und dem ersten Kühlschlauch hergestellt werden. Der Dichtabschnitt kann an einem Umfang des ersten Verbindungsabschnitts ausgebildet sein. Der Dichtabschnitt kann insbesondere zumindest abschnittsweise umfänglich an dem ersten Verbindungsabschnitt ausgebildet sein / zumindest abschnittsweise umfänglich an dem ersten Verbindungsabschnitt verlaufen. Der Dichtabschnitt kann ein oder mehrere insbesondere umfänglich verlaufende, z. B. wulstartige oder gewindeartige oder rippenartige, Vorsprünge aufweisen. Die Vorsprünge können in radialer Richtung des ersten Verbindungsabschnitts vorstehen. Die Vorsprünge können sich beispielsweise vollumfänglich entlang des Umfangs des ersten Verbindungsabschnitts erstrecken. Beispielsweise können zwei oder mehr solcher Vorsprünge parallel zueinander und voneinander beabstandet an dem Umfang des ersten Verbindungsabschnitts ausgebildet sein.

Die Anschlussvorrichtung kann ferner einen Hauptabschnitt aufweisen. Der erste Verbindungsabschnitt kann von einer ersten Seite des Hauptabschnitts in die erste Richtung vorstehen. Der Hauptabschnitt kann verschiedene Formen annehmen. Beispielsweise kann der Hauptabschnitt im Querschnitt rund, insbesondere zumindest nahezu kreisförmig, oder mehreckig sein.

Die Anschlussvorrichtung kann mindestens einen zweiten Verbindungsabschnitt zu einer Verbindung mit mindestens einem zweiten Kühlschlauch des elektrischen Ladekabels aufweisen. Der zweite Verbindungsabschnitt kann auf einer gleichen Seite (d. h. der ersten Seite) oder auf einer anderen Seite (z. B. einer zweiten Seite) des Hauptabschnitts gebildet sein wie bzw. als der erste Verbindungsabschnitt. Beispielsweise kann über den mindestens einen zweiten Verbindungsabschnitt eine mittelbare Verbindung zu dem mindestens einen zweiten Kühlschlauch hergestellt werden. Alternativ kann über den mindestens einen zweiten Verbindungsabschnitt eine unmittelbare Verbindung zu dem mindestens einen zweiten Kühlschlauch hergestellt werden. Die zweite Seite des Hauptabschnitts kann der ersten Seite des Hauptabschnitts gegenüberliegen. Die zweite Seite des Hauptabschnitts kann zu der ersten Seite des Hauptabschnitts benachbart und/oder parallel sein. Beispielsweise können zwei oder mehr Verbindungsabschnitte vorgesehen sein, die jeweils auf unterschiedlichen Seiten, beispielsweise auf gegenüberliegenden Seiten, des Hauptabschnitts ausgebildet sind. Der mindestens eine zweite Verbindungsabschnitt kann sich innerhalb des Hauptabschnitts erstrecken. Der mindestens eine zweite Verbindungsabschnitt kann im Querschnitt eine runde, insbesondere eine zumindest nahezu kreisförmige, Form aufweisen.

Die unmittelbare Verbindung zwischen dem mindestens einen zweiten Verbindungsabschnitt und dem mindestens einen zweiten Kühlschlauch kann erfolgen, indem die Anschlussvorrichtung in einen Stecker/Ladestecker, z. B. einen Isolierkörper des Steckers/Ladesteckers, integriert wird.

Die mittelbare Verbindung zwischen dem mindestens einen zweiten Verbindungsabschnitt und dem mindestens einen zweiten Kühlschlauch kann über ein Verbindungsstück oder Verbindungselement erfolgen. Das Verbindungsstück oder Verbindungselement kann ein von der Anschlussvorrichtung separates Element sein. Alternativ können die Anschlussvorrichtung und das Verbindungsstück oder Verbindungselement integral miteinander verbunden und als eine gemeinsame Verbindungsvorrichtung ausgebildet sein.

Der mindestens eine Kupplungsabschnitt kann mit dem mindestens einen zweiten Verbindungsabschnitt verbunden sein. Die Verbindung zwischen dem mindestens einen Kupplungsabschnitt und dem mindestens einen zweiten Verbindungsabschnitt kann zumindest teilweise durch den ersten Verbindungsabschnitt und/oder den Hauptabschnitt verlaufen. Beispielsweise können zwei oder mehr Kupplungsabschnitte und zwei oder mehr zweite Verbindungsabschnitte vorgesehen sein, wobei jeweils einer der Kupplungsabschnitte mit jeweils genau einem der zweiten Verbindungsabschnitte verbunden sein kann. Auf diese Weise wird eine eindeutige Zuordnung zwischen den Kupplungsabschnitten und den zweiten Verbindungsabschnitten erreicht.

Durch die Verbindung zwischen dem mindestens einen Kupplungsabschnitt, der wiederum mit dem mindestens einen in dem ersten Kühlschlauch aufnehmbaren oder aufgenommenen Schlauchelement verbindbar oder verbunden ist, und dem mindestens einen zweiten, mit dem mindestens einen zweiten Kühlschlauch verbindbaren oder verbundenen Verbindungsabschnitt kann über die Anschlussvorrichtung eine Verbindung zwischen dem ersten Kühlschlauch und dem mindestens einen zweiten Kühlschlauch hergestellt werden. Die Anschlussvorrichtung kann in diesem Fall auch als Adaptervorrichtung bezeichnet werden. Denn die Anschlussvorrichtung stellt eine Art Adapter zwischen dem einen ersten Kühlschlauch und dem mindestens einen zweiten Kühlschlauch her.

Als der mindestens eine Kupplungsabschnitt können zwei oder mehr Kupplungsabschnitte vorgesehen sein. Die zwei oder mehr Kupplungsabschnitte können sich zumindest nahezu parallel zueinander und beabstandet voneinander erstrecken. Zusätzlich oder alternativ können die zwei oder mehr Kupplungsabschnitte eine zumindest nahezu gleiche Querschnittsfläche haben. Auf diese Weise kann ein gleicher Strom an Kühlfluid aus dem ersten Kühlschlauch in die zwei oder mehr Kupplungsabschnitte eintreten oder aus den zwei oder mehr Kupplungsabschnitten in den ersten Kühlschlauch eintreten.

Als der mindestens eine Kupplungsabschnitt kann genau ein Kupplungsabschnitt vorgesehen sein. Der genau eine Kupplungsabschnitt kann sich in dem ersten Verbindungsabschnitt erstrecken. Der genau eine Kupplungsabschnitt kann sich zumindest nahezu parallel zu dem ersten Verbindungsabschnitt erstrecken. Eine Querschnittsfläche des genau einen Kupplungsabschnitts und eine Querschnittsfläche des ersten Verbindungsabschnitts abzüglich der Querschnittsfläche des genau einen Kupplungsabschnitts können sich zumindest nahezu genau entsprechen. Es kann davon gesprochen werden, dass eine Querschnittsfläche des genau einen Kupplungsabschnitts einer Hälfte einer Querschnittsfläche des ersten Verbindungsabschnitts entspricht. Auf diese Weise kann ein gleicher Strom an Kühlfluid aus dem ersten Kühlschlauch in den genau einen Kupplungsabschnitt und den ersten Verbindungsabschnitt abzüglich des genau einen Kupplungsabschnitts eintreten oder aus dem ersten Kühlschlauch in den genau einen Kupplungsabschnitt und den ersten Verbindungsabschnitt abzüglich des genau einen Kupplungsabschnitts eintreten.

Gemäß einem zweiten Aspekt wird ein elektrisches Ladekabel vorgeschlagen. Das elektrische Ladekabel ist beispielsweise als ein elektrisches Ladekabel für Elektrofahrzeuge ausgebildet. Das elektrische Ladekabel weist einen ersten Kühlschlauch und mindestens einen zweiten Kühlschlauch auf. In dem mindestens einen zweiten Kühlschlauch ist jeweils mindestens ein elektrischer Leiter angeordnet. Das elektrische Ladekabel weist eine Anschlussvorrichtung gemäß dem ersten Aspekt auf.

Die Anschlussvorrichtung ist insbesondere mit dem ersten Kühlschlauch und dem mindestens einen zweiten Kühlschlauch verbunden. Insbesondere ist die Anschlussvorrichtung über den ersten Verbindungsabschnitt mit dem ersten Kühlschlauch und über den mindestens einen zweiten Verbindungsabschnitt mit dem mindestens einen zweiten Kühlschlauch verbunden.

Als elektrisches Ladekabel kann hierin ein kabelförmiges Element mit dem ersten Kühlschlauch und dem mindestens einen zweiten Kühlschlauch (mit einem elektrischen Leiter) verstanden werden. Zudem kann das elektrische Ladekabel zur Verbindung des Ladekabels mit einer Ladestation/Ladesäule und/oder einem Elektrofahrzeug erforderliche Stecker/Steckerelemente aufweisen. Solche Stecker/Steckerelemente werden im Normalfall im Nachhinein auf das beispielsweise als Meterware hergestellte Ladekabel aufgebracht. Insbesondere werden Stecker/Steckerelemente an Endabschnitten des Ladekabels aufgebracht. Ferner kann hierin das elektrische Ladekabel als der Bereich verstanden werden, der neben dem ersten Kühlschlauch und dem mindestens einen zweiten Kühlschlauch (mit einem elektrischen Leiter) einen Außenmantel / eine Außenummantelung aufweist, der/die die Komponenten umgibt und das Ladekabel nach außen abgrenzt und/oder äußerlich umfasst/umgibt.

Ein Kühlschlauch (der erste und/oder der mindestens eine zweite Kühlschlauch) ist normalerweise zylindrisch und/oder zylinderförmig und/oder schlauchförmig ausgebildet. Der mindestens eine elektrische Leiter in dem mindestens einen zweiten Kühlschlauch kann als mindestens ein nicht-isolierter elektrischer Leiter ausgebildet sein. Unter "nicht isoliert" ist in Bezug auf den mindestens einen nicht isolierten elektrischen Leiter zu verstehen, dass dieser nicht elektrisch isoliert ist. Der mindestens eine nicht isolierte elektrische Leiter kann in dem mindestens einen zweiten Kühlschlauch angeordnet sein. Beispielsweise kann der mindestens eine nicht isolierte elektrische Leiter im Inneren des mindestens einen zweiten Kühlschlauchs, beispielsweise in einem Hohlraum des mindestens einen zweiten Kühlschlauchs, angeordnet sein. Der mindestens eine nicht isolierte elektrische Leiter kann beispielsweise als ein einziger elektrischer Leiter oder Einzelleiter ausgebildet sein. Der mindestens eine elektrische Leiter kann als Kupferleiter ausgebildet sein. Aufgrund der hohen elektrischen Leitfähigkeit von Kupfer kann die Ladeleistung des Ladekabels bei einer Ausgestaltung des mindestens einen elektrischen Leiters als Kupferleiter hoch sein.

Bei dem Kühlschlauch (dem ersten und/oder dem mindestens einen zweiten Kühlschlauch) kann es sich allgemein um einen sich in Längsrichtung des Ladekabels erstreckenden Körper handeln. Der Körper kann einen Hohlraum aufweisen, in dem ein Kühlmedium (kann auch als Kühlmittel bezeichnet werden) zirkulieren kann. Der Kühlschlauch ist nicht auf einen bestimmten Querschnitt beschränkt. Der Kühlschlauch kann beispielsweise einen runden, eckigen oder ovalen Querschnitt haben. Der Kühlschlauch kann die Form eines Hohlzylinders annehmen, ist jedoch nicht auf eine solche Form beschränkt. Der Kühlschlauch erstreckt sich beispielsweise entlang der vollen Länge der elektrischen Ladekabels. Der Kühlschlauch kann flexibel ausgebildet sein, d.h. insbesondere nicht starr. Der Kühlschlauch ist beispielsweise elastisch biegbar oder verformbar.

Der Kühlschlauch (der erste und/oder der mindestens eine zweite Kühlschlauch) kann für das Kühlmedium zumindest nahezu dicht oder undurchdringbar ausgebildet sein. Der Kühlschlauch kann hierfür beispielsweise in Längsrichtung und Umfangsrichtung vollständig geschlossen sein. Der Kühlschlauch kann in seinem Inneren einen Hohlraum zur Aufnahme des Kühlmediums bilden. Auf diese Weise kann das Kühlmedium in dem Hohlraum zirkulieren, eine Ummantelung des Kühlschlauchs jedoch zumindest nahezu nicht durchdringen. Der Hohlraum des zweiten Kühlschlauchs kann zur Aufnahme des mindestens einen elektrischen Leiters dienen. Sowohl das Kühlmedium als auch der mindestens eine elektrische Leiter können von der Ummantelung umgeben sein. In einem Beispiel kann in jedem Kühlschlauch des mindestens einen zweiten Kühlschlauchs genau ein elektrischer Leiter des mindestens einen elektrischen Leiters angeordnet sein. Das Kühlmedium kann beispielsweise flüssig oder gasförmig sein.

Der mindestens eine, insbesondere nicht-isolierte, elektrische Leiter kann derart mit dem mindestens einen Kühlschlauch in wärmeleitender Verbindung stehen/sein, dass der mindestens eine, insbesondere nicht-isolierte, elektrische Leiter von dem Kühlmedium kühlbar ist. Unter wärmeleitender Verbindung kann eine direkte/unmittelbare oder eine indirekte/mittelbare wärmeleitende Verbindung zwischen dem elektrischen Leiter und Kühlschlauch verstanden werden. Über die wärmeleitende Verbindung kann ein wärmeleitender Austausch zwischen dem Kühlschlauch (genauer gesagt dem in dem Kühlschlauch führbaren Kühlmedium) und dem, insbesondere nicht isolierten, elektrischen Leiter hergestellt werden. Aufgrund der wärmeleitenden Verbindung kann durch den elektrischen Leiter entstehende Wärme über das in dem Kühlschlauch führbare oder geführte Kühlmedium abgeführt werden, d.h. der elektrische Leiter kann über die wärmeleitende Verbindung mittels des in dem Kühlschlauch führbaren oder geführten Kühlmediums beispielsweise direkt gekühlt werden, beispielsweise ohne dass eine Isolation um den elektrischen Leiter die Wärmeübertragung und/oder Wärmeableitung verschlechtert.

Der mindestens eine nicht isolierte elektrische Leiter kann in direktem Kontakt mit dem Kühlmedium stehen. In diesem Fall kann das Kühlmedium als ein elektrisch isolierendes (d.h. als ein nicht elektrisch leitendes) Kühlmedium ausgebildet sein. Aufgrund des direkten Kontakts zwischen dem Kühlmedium und dem mindestens einen nicht isolierten elektrischen Leiter kann der mindestens eine elektrische Leiter besonders effizient gekühlt werden. Steht der mindestens eine nicht isolierte elektrische Leiter in direktem Kontakt mit dem Kühlmedium werden in der Regel von Wasser abweichende Kühlmedien/Kühlmittel eingesetzt. Bei solchen, beispielsweise aggressiven (im Vergleich zu Wasser), Kühlmedien/Kühlmitteln ist eine Beständigkeit des Kühlschlauchs von besonderer Bedeutung. Ist der elektrische Leiter nicht isoliert, wird der elektrische Leiter direkt von dem Kühlmedium/Kühlmittel umspült. In diesem Fall werden nicht-leitende / nicht-leitfähige Kühlmedien/Kühlmittel eingesetzt, beispielswese eine Öl-Glykol Mischung oder andere ölhaltige Substanzen.

Die Anschlussvorrichtung kann in das elektrische Ladekabel, insbesondere in einen Stecker des elektrischen Ladekabels, integriert sein. In diesem Fall können der Stecker und die Anschlussvorrichtung ineinander integriert sein und eine untrennbare Anschlussvorrichtung bilden.

Alternativ kann die Anschlussvorrichtung als ein Formteil in dem elektrischen Ladekabel, insbesondere in einem Stecker des elektrischen Ladekabels, aufgenommen sein. Im letztgenannten Fall können der Stecker und die Anschlussvorrichtung als separate Teile ausgebildet sein. Die separaten Teile können jedoch in geeigneter Weise verbunden werden, um eine gemeinsame Anschlussvorrichtung zu bilden.

Der erste Kühlschlauch kann, wie in Bezug auf die Anschlussvorrichtung gemäß dem ersten Aspekt beschrieben, mit dem ersten Verbindungsabschnitt, insbesondere unmittelbar, verbunden sein. Insbesondere kann der erste Kühlschlauch auf den ersten Verbindungsabschnitt, beispielsweise unmittelbar, aufgebracht sein.

Das mindestens eine Schlauchelement kann, wie in Bezug auf die Anschlussvorrichtung gemäß dem ersten Aspekt beschrieben, mit dem mindestens einen Kupplungsabschnitt gekoppelt oder verbunden sein. Alternativ kann das mindestens eine Schlauchelement, wie in Bezug auf die Anschlussvorrichtung gemäß dem ersten Aspekt beschrieben, mit dem mindestens einen Kupplungsabschnitt integral oder einstückig gebildet oder verbunden sein. Das mindestens eine Schlauchelement kann beispielsweise in den ersten Kühlschlauch hineinragen.

Der mindestens eine zweite Kühlschlauch kann, wie in Bezug auf die Anschlussvorrichtung gemäß dem ersten Aspekt beschrieben, mit dem mindestens einen zweiten Verbindungsabschnitt, z. B. unmittelbar oder mittelbar, verbunden sein. Auf diese Weise kann die Anschlussvorrichtung als eine Adaptervorrichtung dienen, welche ein Verbindung zwischen dem ersten Kühlschlauch und dem mindestens einen zweiten Kühlschlauch bereitstellt.

In dem ersten Kühlschlauch ist beispielsweise kein elektrischer Leiter angeordnet. Anders ausgedrückt, der erste Kühlschlauch ist beispielsweise frei von einem elektrischen Leiter.

Der erste Kühlschlauch kann als ein Vorlauf für ein Kühlmedium ausgebildet sein. Dadurch kann ein zu kühlender Ladestecker von einem Kühlmedium besonders gut gekühlt werden, da dieses nicht durch einen elektrischen Leiter in dem ersten Kühlschlauch erwärmt wurde. Insbesondere können in einem Stecker vorgesehene elektrische Kontakte besonders effizient gekühlt werden.

Der mindestens eine zweite Kühlschlauch kann als ein Rücklauf für ein/das Kühlmedium ausgebildet sein. Beispielsweise können zwei zweite Kühlschläuche vorgesehen sein. Ein Kühlschlauch der zwei zweiten Kühlschläuche kann als ein Rücklauf für ein/das Kühlmedium ausgebildet sein und ein Kühlschlauch der zwei zweiten Kühlschläuche kann als ein Rücklauf für ein/das Kühlmedium ausgebildet sein. Dadurch kann das Kühlmedium vollständig in dem Ladekabel zirkulieren. Der Vorlauf kann auch als Hinleitung bezeichnet werden. Der Rücklauf kann auch als Rückleitung bezeichnet werden. Beispielsweise kann der Vorlauf eine Hinleitung für das Kühlmedium von einer Kühlvorrichtung, z. B. einem Kühlaggregat, zu einer Steckerkühlung darstellen und der Rücklauf kann eine Rückleitung für das Kühlmedium aus der Steckerkühlung zu einer Kühlvorrichtung, z. B. einem Kühlaggregat, darstellen. Unter der Hinleitung kann ein Kanal oder Schlauch verstanden werden, der von einem Ort mit hohem Fluiddruck wegführt. Unter der Rückleitung kann ein Kanal oder ein Schlauch verstanden werden, der zu einem Ort mit tiefem Fluiddruck hinführt. Durch den Vorlauf kann das Kühlfluid hin und durch den Rücklauf zurück transportiert werden.

Alternativ kann der erste Kühlschlauch als ein Rücklauf und der mindestens eine zweite Kühlschlauch als ein Vorlauf für das Kühlmedium ausgebildet sein.

Der mindestens eine elektrische Leiter kann mindestens eine Gleichstromader bilden. Die Gleichstromader dient zur Übertragung von Gleichstrom. Beispielsweise kann die Gleichstromader eine von zur Übertragung von Gleichstrom nötigen (zwei) Gleichstromadern eines Ladekabels sein. Der elektrische Leiter in einem Kühlschlauch der zwei zweiten Kühlschläuche kann eine positive Gleichstromader bilden. Der elektrische Leiter in einem anderen Kühlschlauch der zwei zweiten Kühlschläuche kann eine negative Gleichstromader bilden. Somit kann ein effizientes Gleichstromladen von Elektrofahrzeugen mittels des Ladekabels erfolgen.

Beispielsweise können mit dem Ladekabel Ströme von hundert Ampere (A), oder mehreren hundert Ampere, beispielsweise von bis zu ca. 3000 A, übertragen werden, ohne dass es - bei intakter Kühlung - zu einer nennenswerten Erwärmung der elektrischen Leitungen und/oder des Ladekabels kommt. Das heißt, trotz relativ kleiner/geringer Querschnitte der mindestens einen elektrischen Leitung kann eine hohe Leistung von der Ladestation ins Fahrzeug (und damit an die Batterie) übertragen werden.

Das Ladekabel kann einen Außenmantel aufweisen. Der Außenmantel schützt das Ladekabel und kann daher auch als Schutzmantel bezeichnet werden. Der gemeinsame Außenmantel hält die Kühlschläuche und den/die elektrischen Leiter zusammen und schützt sie beispielsweise vor Abrieb und Umwelteinflüssen. Der Außenmantel kann außerdem wärmeisolierend sein. Die Wärmeisolierung ist insbesondere dann von Vorteil, wenn das Kühlmedium als Kühlfluid ausgebildet ist. Die Wärmeisolierung verhindert beispielsweise ein Einfrieren des Kühlfluids.

Das Ladekabel kann einen oder mehrere Leiter oder eine oder mehrere Adern für das Laden mit Wechselstrom (kurz Wechselstromleiter) aufweisen. Mittels des einen oder der mehreren Leiter für Wechselstrom kann das Ladekabel zum Wechselstromladen eines Elektrofahrzeugs verwendet werden. Beispielsweise kann das Ladekabel ein Kombinationskabel sein, mit dem sowohl Gleichstrom- als auch Wechselstromladen ermöglicht wird. Rein beispielhaft seien hier eine mögliche Ausgestaltung mit drei Leitern/Adern (Leiter, Null-Leiter, Erdung), fünf Leitern/Adern (drei Leiter, Nullleiter, Erdung) oder sieben Leitern/Adern (drei Leiter, Nullleiter, Erdung sowie zwei Leiter für die Kommunikation zwischen einer Energiequelle, z.B. einer Ladestation, und einer Energiesenke, z.B. einer Batterie eines Elektrofahrzeugs oder einem Elektrofahrzeug) genannt. Zusätzlich oder alternativ kann das Ladekabel Daten- und/oder Signalleitungen aufweisen. Die Datenleitungen können ausgebildet sein zur Datenübertragung zwischen einer Energiequelle/Stromquelle, z.B. einer Ladestation, und einer Energiesenke/Stromsenke, z.B. einer Fahrzeugbatterie / einem Fahrzeug. Über die Datenleitungen können die Energiequelle/Stromquelle und die Energiesenke/Stromsenke miteinander kommunizieren.

Insbesondere kann es sich um ein elektrisches Ladekabel handeln, das einen ersten Kühlschlauch, in dem kein elektrischer Leiter angeordnet ist, und zwei zweite Kühlschläuche, in denen jeweils ein elektrischer Leiter angeordnet ist, umfasst. Ferner kann das elektrische Ladekabel noch weitere Komponenten, beispielsweise einen Schutzleiter, einen Außenmantel, zusätzliche Steuerleitungen oder/und Füllelemente umfassen.

Das Ladekabel kann mindestens einen Schutzleiter aufweisen. Der mindestens eine Schutzleiter kann auch als PE-Leiter (PE: Protective Earth) bezeichnet werden. Ein Schutzleiter ist ein elektrischer Leiter zum Zweck der Sicherheit, zum Beispiel zum Schutz gegen elektrischen Schlag.

Gemäß einem dritten Aspekt kann ein Ladesystem bereitgestellt werden. Das Ladesystem kann das Ladekabel gemäß dem zweiten Aspekt, einen Endanschluss und einen Stecker aufweisen. Der Endanschluss kann eine Zuführung für das Kühlmedium aufweisen, welche das Kühlmedium zumindest in einen Kühlschlauch des elektrischen Ladekabels einführen kann und aus einem anderen Kühlschlauch des elektrischen Ladekabels aufnehmen kann. Der Stecker ist ausgebildet, mit einem Fahrzeug verbunden zu werden. Der Stecker kann neben den elektrischen Kontakten zur elektrischen Verbindung der vorhandenen elektrischen Leiter mit Leitungen des Fahrzeugs eine Fluidrückführung und/oder ein Verbindungsstück/Verbindungselement aufweisen, welche das Kühlmedium aus einem Kühlschlauch aufnehmen und zu einem anderen Kühlschlauch führen kann.

Ferner kann gemäß einem vierten Aspekt eine Ladestation mit dem Ladekabel gemäß dem zweiten Aspekt oder mit einem Ladesystem gemäß dem dritten Aspekt bereitgestellt werden.

Auch wenn einige der voranstehend beschriebenen Aspekte in Bezug auf die Anschlussvorrichtung gemäß dem ersten Aspekt beschrieben wurden, so können diese Aspekte auch in entsprechender Weise in dem elektrischen Ladekabel gemäß dem zweiten Aspekt, dem Ladesystem gemäß dem dritten Aspekt und/oder in der Ladestation gemäß dem vierten Aspekt realisiert sein/werden und umgekehrt.

Die vorliegende Erfindung soll weiter anhand von Figuren erläutert werden. Diese Figuren zeigen schematisch:
- Figur 1a: eine Querschnittsansicht eines elektrischen Ladekabels, das mit der Anschlussvorrichtung gemäß dem ersten Ausführungsbeispiel aus Figuren 1a bis 1c und gemäß dem zweiten Ausführungsbeispiel aus Figuren 2a und 2b verwendet werden kann;
- Figur 1b: eine Querschnittsansicht eines elektrischen Ladekabels, das mit der Anschlussvorrichtung gemäß dem ersten Ausführungsbeispiel aus Figuren 1a bis 1c und gemäß dem zweiten Ausführungsbeispiel aus Figuren 2a und 2b verwendet werden kann;
- Figur 2a: eine perspektivische Ansicht eines ersten Ausführungsbeispiels einer Anschlussvorrichtung für ein elektrisches Ladekabel, die mit einem elektrischen Ladekabel gemäß Figuren 1a und 1b verwendet werden kann;
- Figur 2b: eine Darstellung einer Anschlussvorrichtung gemäß dem ersten Ausführungsbeispiel mit einem ersten Kühlschlauchabschnitt in einem separierten Zustand;
- Figur 2c: eine Darstellung einer Anschlussvorrichtung gemäß dem ersten Ausführungsbeispiel mit einem ersten Kühlschlauchabschnitt in einem zusammengesetzten Zustand;
- Figur 3a: eine perspektivische Ansicht eines zweiten Ausführungsbeispiels einer Anschlussvorrichtung für ein elektrisches Ladekabel, die mit einem elektrischen Ladekabel gemäß Figuren 1a und 1b verwendet werden kann;
- Figur 3b: eine Querschnittsansicht eines ersten Verbindungsabschnitts einer Anschlussvorrichtung aus Figur 2a;
- Figur 4: eine vereinfachte seitliche Ansicht verschiedener elektrischer Ladekabel.

Im Folgenden werden, ohne hierauf beschränkt zu sein, spezifische Details dargelegt, um ein vollständiges Verständnis der vorliegenden Erfindung zu liefern. Es ist einem Fachmann jedoch klar, dass die vorliegende Erfindung in anderen Ausführungsbeispielen verwendet werden kann, die von den nachfolgend dargelegten Details abweichen können. Die Figuren dienen ferner lediglich zum Zwecke der Verdeutlichung von Ausführungsbeispielen. Sie sind nicht maßstabsgetreu und sollen lediglich das allgemeine Konzept der Erfindung beispielhaft widerspiegeln. Beispielsweise sollen Merkmale, die in den Figuren enthalten sind, keineswegs als notwendiger Bestandteil erachtet werden.

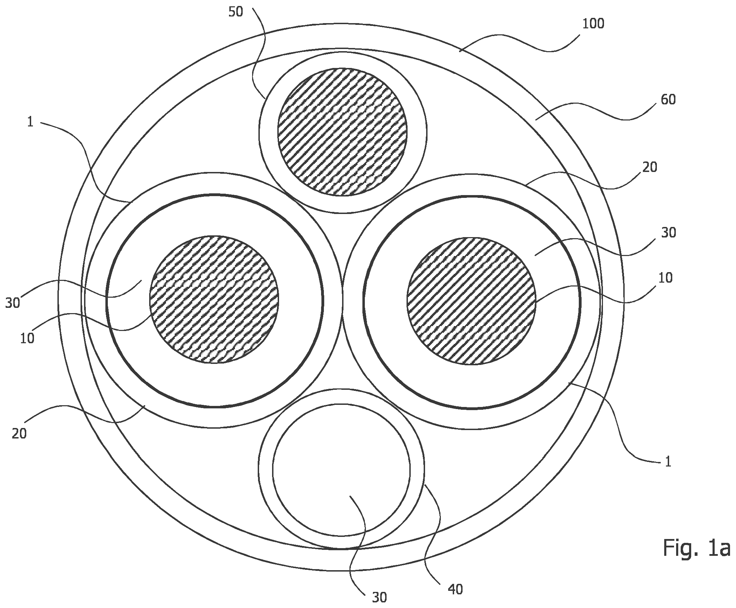

Figur 1a zeigt eine erste Ausgestaltungsmöglichkeit eines elektrischen Ladekabels 100 mit genau zwei elektrischen Leitungen 1. Jede elektrische Leitung 1 weist einen Kühlschlauch 20 und einen in dem Kühlschlauch angeordneten elektrischen Leiter 10 auf. In dem Zwischenraum zwischen dem Kühlschlauch 20 und dem elektrischen Leiter 10 kann ein Kühlmedium 30 zirkulieren. Ferner ist in dem Ladekabel 100 ein Schutzleiter 50 angeordnet. Das elektrische Ladekabel 100 weist einen weiteren Kühlschlauch 40 auf. In dem weiteren Kühlschlauch 40 ist kein elektrischer Leiter angeordnet, d. h. der weitere Kühlschlauch 40 ist frei von elektrischen Leitern. Beispielsweise ist der weitere Kühlschlauch 40 bis auf etwaig vorhandenes Kühlmedium 30 leer. Der weitere Kühlschlauch 40 weist beispielhaft einen geringeren Außendurchmesser auf als die Kühlschläuche 20 der zwei Leitungen 10. Das Ladekabel 100 weist ferner einen alle Komponenten umfänglich umgebenden Außenmantel 60 auf. Im Folgenden wird der Kühlschlauch 40, in dem kein elektrischer Leiter angeordnet ist, teilweise auch als erster Kühlschlauch 40 bezeichnet. Die Kühlschläuche 20, in denen elektrische Leiter 10 angeordnet sind, werden teilweise auch als zweite Kühlschläuche bezeichnet.

Beide elektrischen Leiter 10 der Leitungen 1 sind jeweils von dem zugehörigen Kühlschlauch 20 umgeben. In jedem der beiden Kühlschläuche 20 kann ein Kühlmedium 30 aufgenommen sein und beispielsweise zirkulieren. Das Kühlmedium 30 wird in jedem der beiden Kühlschläuche 20 geführt. Jeder der beiden Kühlschläuche 20 umgibt daher das zugehörige Kühlmedium 30. Entsprechend können die beiden elektrischen Leiter 10 jeweils von einem Kühlmedium 30 umgeben sein. In diesem Fall handelt es sich bei dem Kühlmedium 30 um ein elektrisch isolierendes (d.h. nicht leitfähiges) Kühlmedium 30.

Der jeweilige Kühlschlauch 20 ist zumindest nahezu dicht für das zugehörige Kühlmedium 30. Hierzu dient die oben beschriebene Ummantelung, die auch als Mantel oder Außenhülle oder Isolierhülle bezeichnet werden kann. Die Isolierhülle des jeweiligen Kühlschlauchs 20 ist in einem unbeschädigten Zustand für das Kühlmedium 30 zumindest nahezu dicht / undurchdringbar. Das heißt, das Kühlmedium 30 kann in einem normalen, unbeschädigten Zustand des Kühlschlauchs 30 normalerweise nicht aus dem Kühlschlauch 30 nach außen in einen Innenraum des Ladekabels 100 eindringen.

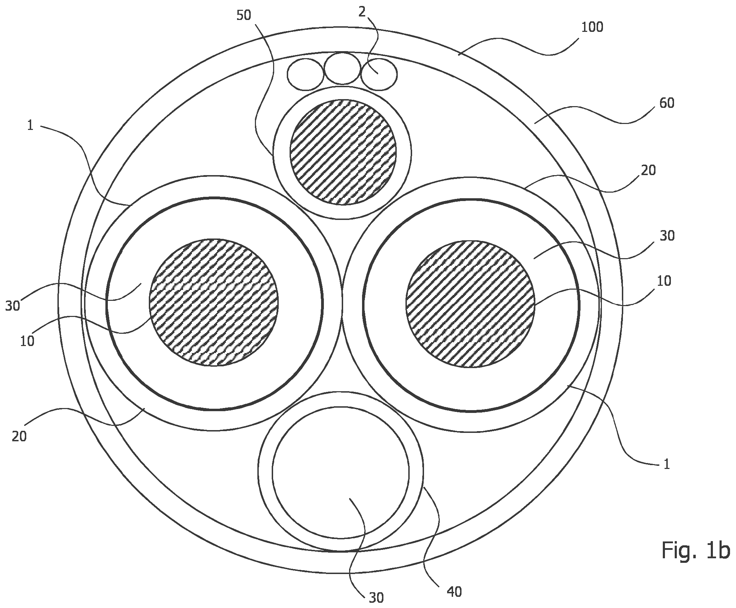

Figur 1b zeigt eine zweite Ausgestaltungsmöglichkeit eines elektrischen Ladekabels 100 mit genau zwei elektrischen Leitungen 1. Das elektrische Ladekabel 100 gemäß Figur 1b entspricht im Wesentlichen dem elektrischen Ladekabel 100 gemäß Figur 1a, so dass auf eine Wiederholung der übereinstimmenden Merkmale verzichtet wird. Der Schutzleiter 50 aus Figur 1b hat im Vergleich zu dem Schutzleiter 50 aus Figur 1a einen kleineren Durchmesser. Dafür sind weitere Füllelemente 2 zur Fixierung des Schutzleiters 50 vorgesehen.

Gemäß einem Beispiel, das sowohl in der Ausgestaltung nach Figur 1a als auch in der Ausgestaltung nach Figur 1b realisiert werden kann, ist der weitere/erste Kühlschlauch 40 als ein Vorlauf für ein Kühlmedium 30 ausgebildet. Gemäß diesem Beispiel ist ein Kühlschlauch 20 einer der elektrischen Leitungen 1 als ein Rücklauf für das Kühlmedium 30 ausgebildet und ist ein Kühlschlauch 20 einer weiteren der elektrischen Leitungen 1 als ein Rücklauf für das Kühlmedium 30 ausgebildet. Auf diese Weise gelangt möglichst kühles Kühlmedium 30 aus der Ladestation über den leeren Kühlschlauch 40 zu einem Ladestecker, ohne durch elektrische Leiter erwärmt zu werden. Der Ladestecker wird somit bestmöglich gekühlt. Das durch die Kühlung des Ladesteckers leicht erwärmte Kühlmedium 30 wird über die Rückläufe in den Kühlschläuchen 20 zurück zu der Ladestation geführt. Das leicht erwärmte Kühlmedium 30 ist jedoch ausreichend kühl, um die Wärme der elektrischen Leiter 10 aufzunehmen und abzuführen.

Alternativ können die zwei (zweiten) Kühlschläuche 20 als ein Vorlauf und der (erste) Kühlschlauch 40 als ein Rücklauf ausgebildet sein.

Ferner bildet beispielhaft der elektrische Leiter 10 der ersten elektrischen Leitung 1 eine positive Gleichstromader und bildet der elektrische Leiter 10 der zweiten elektrischen Leitung 1 eine negative Gleichstromader. Dies ist als rein beispielhaft zu verstehen und die Erfindung ist nicht auf dieses Beispiel beschränkt. Bei dem elektrischen Ladekabel 100 kann es sich beispielsweise um ein Ladekabel für Elektrofahrzeuge handeln.

In den Beispielen aus Figuren 1a und 1b sind zwei Leitungen 1 vorgesehen, die jeweils einen Kühlschlauch 20 und einen elektrischen Leiter 10 aufweisen. In jeder der zwei ersten Leitungen 1 verlaufen der Kühlschlauch 20 und der elektrische Leiter 10 koaxial mit der Längsachse der jeweiligen Leitung 1 als gemeinsamer Achse. Bei den beiden elektrischen Leitern 10 kann es sich jeweils um einen Massivleiter oder um eine flexible Litze handeln. Die beiden elektrischen Leiter 10 können jeweils als nicht isolierte (unisolierte) elektrische Leiter ausgebildet sein. Die elektrischen Leiter 10 können als Kupferleiter ausgebildet sein. Die elektrischen Leiter 10 können jeweils eine Gleichstromader bilden. Anders ausgedrückt, jeder der elektrischen Leiter 10 kann eine von zur Übertragung von Gleichstrom nötigen (zwei) Gleichstromadern des Ladekabels 100 sein. Beispielsweise kann einer der zwei elektrischen Leiter 10 eine positive Gleichstromader bilden und ein anderer der zwei elektrischen Leiter 10 kann eine negative Gleichstromader bilden. Somit kann ein effizientes Gleichstromladen von Elektrofahrzeugen mittels des Ladekabels 100 erfolgen. Die Gleichstromader(n) dient/dienen zur Übertragung von Gleichstrom in dem Ladekabel 100.

Das Ladekabel 100 kann optional Wechselstromleitungen aufweisen. Auf die Wechselstromleitungen kann jedoch auch verzichtet werden. Ist keine Wechselstromleitung vorgesehen, so ist das Ladekabel 100 als Gleichstromladekabel ausgebildet. Sind hingegen die zwei Leitungen 1 sowie eine Wechselstromleitung vorgesehen, so ist das Ladekabel 100 als Kombinationsladekabel für wahlweises Gleich- und Wechselstromladen ausgebildet. Auch kann eine Signalleitung 30 vorgesehen sein.

In dem Ladekabel 100 gemäß jeder der Ausgestaltungsmöglichkeiten können darüber hinaus Sensoren (nicht gezeigt), beispielsweise einer oder mehrere Temperatursensoren, mit eingebracht sein / werden. Dies erhöht die Sicherheit des Ladekabels 100 durch gezielte Überwachung, beispielsweise Temperaturüberwachung.

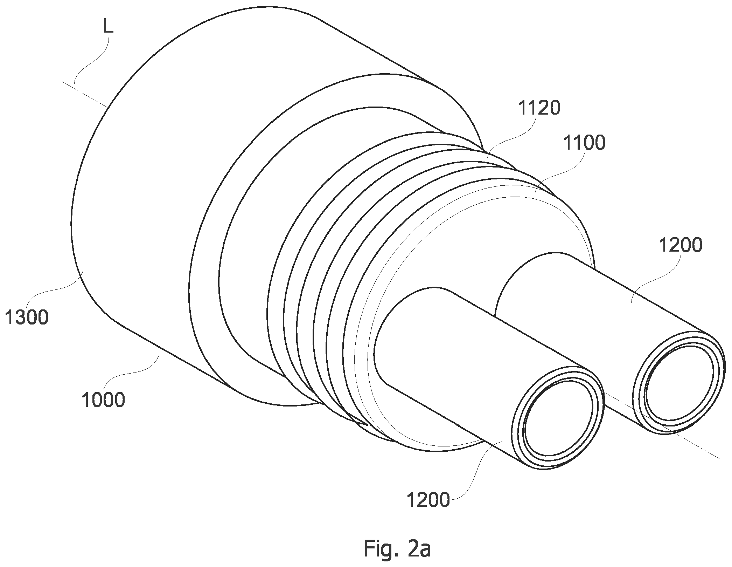

Gemein ist den beiden Ausgestaltungsmöglichkeiten, dass ein elektrisches Ladekabel 100 bereitgestellt wird, das einen ersten Kühlschlauch 40 und mindestens einen zweiten Kühlschlauch 20 aufweist, in dem mindestens ein elektrischer Leiter 10 angeordnet ist. Ferner kann ein solches, beispielhaft in Bezug auf Figuren 1a und 1b beschriebenes elektrisches Ladekabel 100, mit einer Anschlussvorrichtung verwendet werden, wie sie in Bezug auf die Figuren 2a bis 3b beschrieben wird. Das elektrische Ladekabel 100 kann daher bei Verwendung einer solchen Anschlussvorrichtung 1000 zudem eine solche Anschlussvorrichtung 1000 aufweisen.

Figur 2a zeigt eine perspektivische Ansicht einer Anschlussvorrichtung 1000 für ein elektrisches Ladekabel, beispielsweise für ein elektrisches Ladekabel 100 wie es in Bezug auf Figuren 1a und 1b beschrieben wurde. Im Folgenden wird der Einfachheit halber die Anschlussvorrichtung 1000 in Bezug auf das elektrische Ladekabel 100 aus Figur 1a beschrieben. Bei der in Figur 2a gezeigten Anschlussvorrichtung 1000 handelt es sich um eine erste Ausgestaltungsmöglichkeit.

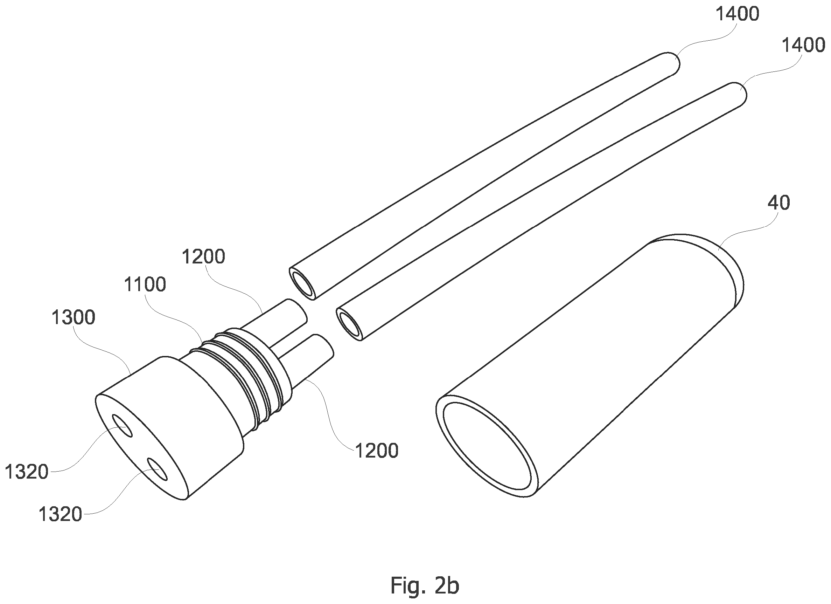

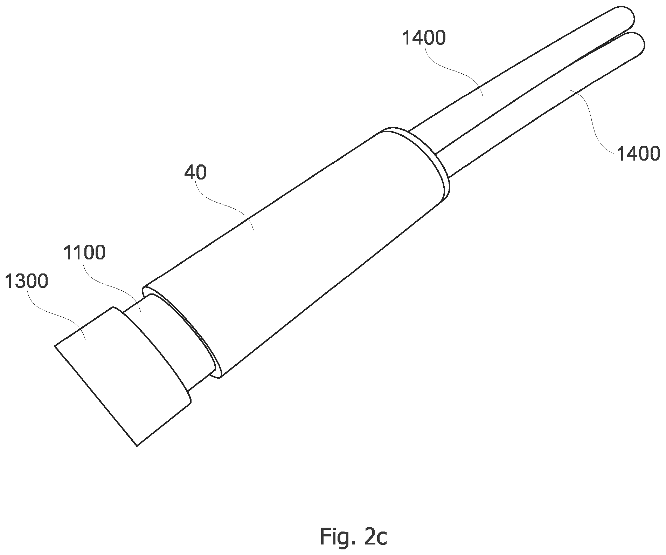

Die Anschlussvorrichtung 1000 weist einen ersten Verbindungsabschnitt 1100 auf. Der erste Verbindungsabschnitt 1100 dient zur Verbindung mit einem ersten Kühlschlauch 40 des elektrischen Ladekabels 100. Die Anschlussvorrichtung 1000 weist ferner mindestens einen von dem ersten Verbindungsabschnitt 1100 in einer ersten Richtung vorstehenden Kupplungsabschnitt 1200 auf. Der mindestens eine Kupplungsabschnitt 1200 ist in Figur 2a beispielhaft ausgebildet, mit mindestens einem Schlauchelement 1400 gekoppelt zu werden, wie dies in Bezug auf Figuren 2b und 2c beschrieben werden wird. In der Variante aus Figuren 2a, 2b und 2c sind beispielhaft genau zwei Kupplungsabschnitte 1200 als ein Beispiel für den mindestens einen Kupplungsabschnitt 1200 gezeigt. Alternativ ist es denkbar und realisierbar, den mindestens einen Kupplungsabschnitt 1200 derart auszubilden, dass er integral oder einstückig mit mindestens einem Schlauchelement 1400 gebildet oder verbunden ist. Die integrale oder einstückige Bildung ist durch ein Spritzgussverfahren, wie ein 2-Komponenten-Spritzgzussverfahren, realisierbar. Die integrale oder einstückige Verbindung kann durch Verklebung des mindestens einen Kupplungsabschnitts 1200 und des mindestens einen Schlauchelements 1400 erreicht werden.

In Figur 2a ist als eine gestrichelte Linie eine Längsachse L der Anschlussvorrichtung 1000 zu erkennen. Als Längsachse L wird für gewöhnlich jene Achse eines Körpers, hier der Anschlussvorrichtung 1000, bezeichnet, die der Richtung seiner größten Ausdehnung entspricht. Im Fall von Figur 2a ist die Längsachse L eine zumindest annähernde Symmetrieachse des Körpers, hier der Anschlussvorrichtung 1000.

Der erste Verbindungsabschnitt 1100 erstreckt sich beispielhaft rotationssymmetrisch um und entlang der Längsachse L. Der erste Verbindungsabschnitt 1100 hat beispielhaft einen zylinderförmigen/rohrförmigen Aufbau mit einem beispielhaft kreisförmigen Querschnitt. Der erste Verbindungsabschnitt 1100 kann zumindest teilweise hohl und/oder zumindest teilweise gefüllt sein. Ausgehend von diesem ersten Verbindungsabschnitt 1100 erstrecken sich beispielhaft zwei Kupplungsabschnitte 1200 in einer Richtung (der ersten Richtung) entlang der Längsachse L. Die zwei Kupplungsabschnitte 1200 erstrecken sich beispielhaft zumindest nahezu parallel zueinander und beabstandet voneinander. Die Kupplungsabschnitte 1200 weisen eine zumindest nahezu gleiche Querschnittsfläche auf.

Der erste Verbindungsabschnitt 1100 ist in der Variante aus Figur 2a beispielhaft ausgebildet, unmittelbar mit einem ersten Kühlschlauch 40 des elektrischen Ladekabels 100 verbunden zu werden. Ein Abschnitt eines solchen Kühlschlauchs 40 ist in den Figuren 2b und 2c gezeigt. In Figur 2b besteht keine Verbindung zwischen dem Abschnitt des Kühlschlauchs 40 und dem Verbindungsabschnitt 1100 oder der Anschlussvorrichtung 1000 über den Verbindungsabschnitt 1100. In Figur 2c ist der Abschnitt des Kühlschlauchs 40 unmittelbar auf den Verbindungsabschnitt 1100 aufgebracht. Somit besteht eine unmittelbare Verbindung zwischen dem Verbindungsabschnitt 1100 und dem Kühlschlauch 40. In diesem Zustand sind die zwei Kupplungsabschnitte 1200 in dem ersten Kühlschlauch 40 zumindest abschnittsweise aufgenommen; die zwei Kupplungsabschnitte 1200 ragen in den ersten Kühlschlauch 40 hinein. Wie in Figur 2c zu erkennen, umgibt der Kühlschlauch 40 in der gezeigten Variante einen Abschnitt des Verbindungsabschnitts 1100. Alternativ kann, zum Herstellen einer Verbindung, der Verbindungsabschnitt 1100 einen Abschnitt des ersten Kühlschlauchs 40 umgeben.

Der erste Verbindungsabschnitt 1100 weist mindestens einen Dichtabschnitt 1120 auf. Der Dichtabschnitt 1120 verläuft in der ersten Variante gemäß Figuren 2a bis 2c beispielhaft vollumfänglich um den ersten Verbindungsabschnitt 1100. In dem gezeigten Beispiel ist der Dichtabschnitt 1120 beispielhaft ringförmig ausgestaltet. Abweichend von der vollumfänglichen Ausgestaltung aus Figuren 2a bis 2c sind auch ein oder mehrere Vorsprünge, wie Vor- oder Auswölbungen, am Außenumfang des ersten Verbindungsabschnitts 1100 denkbar. In der beispielhaft gezeigten Variante sind mehrere vollumfänglich verlaufende, ringförmige Wölbungen gezeigt, die beispielhaft parallel zueinander verlaufen. Alternativ ist ein schrauben-/helix-/gewindeförmiger Wölbungsverlauf für den Dichtabschnitt 1120 denkbar. Abweichend von Figuren 2a bis 2c kann auch eine einzelne ringförmige Wölbung ausreichend sein. Unabhängig von der genauen Ausgestaltung dringt der Dichtabschnitt 1120 in Figur 2c zumindest teilweise in den Innenumfang des Kühlschlauchs 40 ein. Der Dichtabschnitt 1120 führt somit zu einer zumindest weitestgehend oder nahezu fluiddichten Verbindung zwischen dem ersten Verbindungsabschnitt 1120 und dem Kühlschlauch 40.

Ausgehend von Figur 2b kann der erste Verbindungsabschnitt 1100 in den Kühlschlauch 40 eingebracht, z. B. eingeschoben oder eingeführt, werden, oder es kann der erste Kühlschlauch 40 auf den ersten Verbindungsabschnitt 1100 aufgebracht, z. B. aufgeschoben oder aufgesteckt, werden. Bei einer helixförmigen Ausgestaltung des Dichtabschnitts 1120 kann der Verbindungsabschnitt 1100 besonders einfach in den Kühlschlauch 40 eingedreht oder auf diesen aufgedreht werden und/oder der Kühlschlauch 40 kann besonders einfach auf den Verbindungsabschnitt 1100 aufgedreht oder in diesen eingedreht werden.

Die zwei Kupplungsabschnitte 1200 stehen von dem ersten Verbindungsabschnitt 1100 entlang der Längsachse L vor. Die Kupplungsabschnitte 1200 können jeweils mit einem der in Figur 2b gezeigten Schlauchelemente 1400 verbunden oder gekoppelt werden. Wie in Figur 2b zu erkennen, haben diese Schlauchelemente 1400 zumindest nahezu einen dem Durchmesser und Umfang der Kupplungsabschnitte 1200 entsprechenden Durchmesser und Umfang, aber einen kleineren Durchmesser und Umfang als der Kühlschlauch 40. Die Schlauchelemente 1400 sind im Normalfall kürzer als der Kühlschlauch 40 (die Länge täuscht in Figur 2b, da in Figur 2b nur ein Abschnitt des Kühlschlauchs 40 gezeigt ist).

In der gezeigten Variante werden die Schlauchelemente 1400, wie in Figur 2c zu erkennen, jeweils auf einen der Kupplungsabschnitte 1200 aufgebracht. Auf diese Weise werden die Kupplungsabschnitte 1200 mit den Schlauchelementen 1400 verbunden. In diesem Fall umgeben die Schlauchelemente 1400 zumindest einen Abschnitt der Kupplungsabschnitte 1200. Alternativ können die Schlauchelemente 1400 in die Kupplungsabschnitte 1200 eingebracht werden. In diesem Fall können die Kupplungsabschnitte 1200 jeweils einen Abschnitt der Schlauchelemente 1400 umgeben. Auch zwischen den Kupplungsabschnitten 1200 und den Schlauchelementen 1400 kann in Figur 2c eine fluiddichte Verbindung bestehen.

In dem verbundenen Zustand aus Figur 2c ragen die Schlauchelemente 1400, ausgehend von den Kupplungsabschnitten 1200 in Richtung der Längsachse L, in den ersten Kühlschlauch 40 hinein. Die Schlauchelemente 1400 sind zumindest abschnittsweise in dem Kühlschlauch 40 aufgenommen. Somit besteht eine Fluidverbindung zwischen dem Kühlschlauch 40 und den zwei Schlauchelementen 1400 und über die zwei Schlauchelemente 1400 mit den zwei Kupplungsabschnitten 1200 und mit der Anschlussvorrichtung 1000 als solcher.

Fließt in dem Kühlschlauch 40 ein Kühlmedium, z. B. ein Kühlfluid, in Richtung der Anschlussvorrichtung 1000, strömt das Kühlmedium durch die zwei Schlauchelemente 1400 in die zwei Kupplungsabschnitte 1200 und dadurch in die Anschlussvorrichtung 1000 selbst. Fließt ein Kühlmedium in Richtung des Kühlschlauchs 40, strömt das Kühlmedium durch die zwei Kupplungsabschnitte 1200 in die zwei Schlauchelemente 1400 und dadurch in den Kühlschlauch 40.

Die Anschlussvorrichtung 100 weist ferner beispielhaft einen Hauptabschnitt 1300 auf. In der gezeigten Variante erstreckt sich der erste Verbindungsabschnitt 1100 von einer ersten Seite des Hauptabschnitts 1300 in die erste Richtung entlang der Längsachse L. Anders ausgedrückt, der Hauptabschnitt 1300 liegt, ausgehend von dem Verbindungsabschnitt 1100, auf einer von den Kupplungsabschnitten 1200 abgewandten Seite. In dem Beispiel aus Figuren 2a bis 2c hat der Hauptabschnitt 1300 beispielhaft einen größeren Umfang/Durchmesser als der Verbindungsabschnitt 1100. Andere Ausgestaltungen sind denkbar und realisierbar. Der Hauptabschnitt 1300 kann beispielsweise entsprechend dem Verbindungsabschnitt 1100 ausgebildet sein.

Wie in Figur 2b zu erkennen, ist beispielhaft auf einer zweiten Seite des Hauptabschnitts 1300 mindestens ein zweiter Verbindungabschnitt 1320 ausgebildet. In dem Beispiel aus Figur 2b sind genau zwei Verbindungsabschnitte 1320 vorgesehen und beide Verbindungsabschnitte 1320 befinden sich beispielhaft auf einer gleichen Seite des Hauptabschnitts 1300. Diese Seite des Hauptabschnitts 1300 ist beispielhaft eine Seite des Hauptabschnitts 1300, die der Seite gegenüberliegt, von welcher ausgehend sich die Kupplungsabschnitte 1200 erstrecken. In dem Beispiel aus Figur 2b sind die zwei zweiten Verbindungsabschnitte 1320 zwei rohrförmige Ausnehmungen in dem Hauptabschnitt 1300. Alternativ ist es denkbar und realisierbar, die Kupplungsabschnitte 1200 und die zweiten Verbindungsabschnitte 1320 auf einer gleichen Seite des Hauptabschnitts auszubilden.

Die zwei zweiten Verbindungsabschnitte 1320 sind auf einer Seite mit den Kupplungsabschnitten 1200 verbunden. Im einfachsten Fall verläuft ausgehend von den Kupplungsabschnitten 1200 jeweils eine rohrförmige Ausnehmung durch den ersten Verbindungsabschnitt 1100 und den Hauptabschnitt 1300 zu den zweiten Verbindungsabschnitten 1320. Genauer gesagt ist einer der zweiten Verbindungsabschnitte 1320 mit einem der Kupplungsabschnitte 1200 verbunden und ist ein anderer der zweiten Verbindungsabschnitte 1320 mit einem anderen der Kupplungsabschnitte 1200 verbunden. Sind die Kupplungsabschnitte 1200 und die zweiten Verbindungsabschnitte 1320 auf der gleichen Seite angeordnet, können diese miteinander über eine U-förmige Verbindung verbunden werden.

Die zweiten Verbindungsabschnitte 1320 können mit mindestens einem zweiten Kühlschlauch 20 des elektrischen Ladekabels verbunden sein/werden. Die Verbindung ist beispielhaft eine mittelbare Verbindung, bei welcher der mindestens eine zweite Kühlschlauch 20 über ein Verbindungsstück, z. B. ein Y-Stück, mit den zwei zweiten Verbindungsabschnitten 1320 verbunden wird. Insbesondere können zwei zweite Kühlschläuche 20 eines elektrischen Ladekabels 100 über ein solches Verbindungsstück mit den zwei Verbindungsabschnitten 1320 verbunden sein/werden. Dabei ist/wird einer der zwei zweiten Kühlschläuche 20 mit einem der zwei Verbindungsabschnitte 1320 verbunden und wird ein anderer der zwei zweiten Kühlschläuche 20 mit einem anderen der zwei Verbindungsabschnitte 1320 verbunden. Auf diese Weise kommt es zu einer mittelbaren Verbindung zwischen den zwei zweiten Kühlschläuchen 20 und der Anschlussvorrichtung 1000 und über die Anschlussvorrichtung 1000 zu dem ersten Kühlschlauch 40.

Alternativ zu einer mittelbaren Verbindung können die zweiten Kühlschläuche 20 unmittelbar mit den zweiten Verbindungsabschnitten 1320 verbunden werden. Beispielsweise kann hierfür die Anschlussvorrichtung 1000 in einen Ladestecker integriert sein/werden. Sind beispielsweise die Kupplungsabschnitte 1200 und die zweiten Verbindungsabschnitte 1320 auf der gleichen Seite angeordnet, kann der erste Kühlschlauch 40 auf dieser Seite mit dem ersten Verbindungsabschnitt 1100 und können die zweiten Kühlschläuche 20 auf dieser Seite mit den zweiten Verbindungsabschnitten 1320 verbunden werden.

Fließt in dem ersten Kühlschlauch 40 ein Kühlmedium in Richtung der Anschlussvorrichtung 1000, strömt das Kühlmedium durch die zwei Schlauchelemente 1400 in die zwei Kupplungsabschnitte 1200, dadurch in die Anschlussvorrichtung 1000 selbst und von dort, über das Verbindungsstück, in die zwei zweiten Kühlschläuche 20. Dadurch wird über die Anschlussvorrichtung 1000 eine Verbindung zwischen dem ersten Kühlschlauch 40 und den zwei zweiten Kühlschläuchen 20 hergestellt. Sind die Querschnittsflächen der Schlauchelemente 1400 zumindest nahezu gleich groß und sind die Querschnittsflächen der zwei Kupplungsabschnitte 1200 zumindest nahezu gleich groß, strömt zumindest nahezu eine gleiche Menge an Kühlmedium in die Kupplungsabschnitte 1200. Fließt in den zwei Kühlschläuchen 20 ein Kühlmedium in Richtung der Anschlussvorrichtung 1000, strömt das Kühlmedium über die zwei zweiten Verbindungsabschnitte 1320, durch den Hauptabschnitt 1300 und den ersten Verbindungsabschnitt 1100 in die zwei Kupplungsabschnitte 1200 und von dort über die zwei Schlauchelemente 1400 in den ersten Kühlschlauch 40.

Über die Anschlussvorrichtung 1000 wird somit eine Fluidverbindung zwischen dem ersten Kühlschlauch 40 und den zwei zweiten Kühlschläuchen 20 hergestellt.

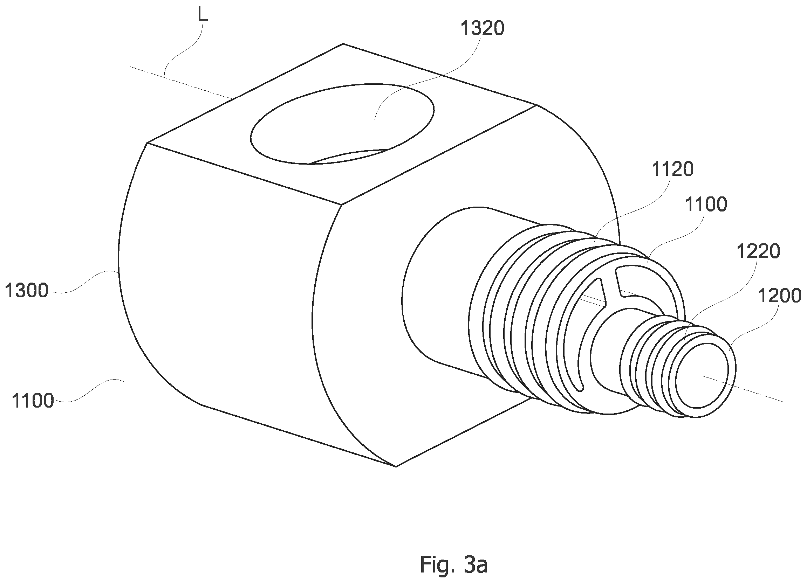

Figur 3a zeigt eine perspektivische Ansicht einer Anschlussvorrichtung 1000 für ein elektrisches Ladekabel 100, beispielsweise für ein elektrisches Ladekabel 100 wie es in Bezug auf Figuren 1a und 1b beschrieben werden wurde. Bei der in Figur 3a gezeigten Anschlussvorrichtung 1000 handelt es sich um eine zweite Ausgestaltungsmöglichkeit.

Die Anschlussvorrichtung 1000 weist einen ersten Verbindungsabschnitt 1100 auf. Der erste Verbindungsabschnitt 1100 dient zur Verbindung mit einem ersten Kühlschlauch 40 des elektrischen Ladekabels 100. Die Anschlussvorrichtung 1000 weist ferner mindestens einen von dem ersten Verbindungsabschnitt 1100 in einer ersten Richtung vorstehenden Kupplungsabschnitt 1200 auf. Der mindestens eine Kupplungsabschnitt 1200 ist ausgebildet, mit mindestens einem Schlauchelement 1400 gekoppelt zu werden, wie dies in Bezug auf Figuren 2b und 2c beschrieben wurde.

In der Variante aus Figur 3a ist beispielhaft genau ein Kupplungsabschnitt 1200 als ein Beispiel für den mindestens einen Kupplungsabschnitt 1200 gezeigt. Dieser genau eine Kupplungsabschnitt 1200 kann gemäß dem gezeigten Beispiel mit genau einem Schlauchelement 1400 verbunden sein/werden. Auch hier ist alternativ eine integrale oder einstückige Bildung oder Verbindung von Kupplungsabschnitt 1200 und Schlauchelement 1400 denkbar und realisierbar, wie beschrieben.

In Figur 3a ist als eine gestrichelte Linie eine Längsachse L der Anschlussvorrichtung 1000 zu erkennen. Im Fall von Figur 3a ist die Längsachse L, bezüglich einer Rotationssymmetrie, keine zumindest annähernde Symmetrieachse des Körpers, hier der Anschlussvorrichtung 1000.

Der erste Verbindungsabschnitt 1100 erstreckt sich beispielhaft rotationssymmetrisch um und entlang der Längsachse L. Der erste Verbindungsabschnitt 1100 hat beispielhaft einen zylinderförmigen/rohrförmigen Aufbau mit einem beispielhaft kreisförmigen Querschnitt. Der Verbindungsabschnitt 1100 kann zumindest teilweise hohl und/oder zumindest teilweise gefüllt sein. Ferner erstreckt sich beispielhaft ein Kupplungsabschnitt 1200 in einer Richtung (der ersten Richtung) entlang der Längsachse L. Der Kupplungsabschnitt 1200 ist beispielhaft rotationssymmetrisch um die Längsachse L, aber beispielhaft nicht konzentrisch mit dem ersten Verbindungsabschnitt 1100 angeordnet. Hingegen ist der Mittelpunkt des Kupplungsabschnitts 1200 gegenüber dem Mittelpunkt des Verbindungsabschnitts 1100 in Figur 3a beispielhaft verschoben (in Figur 3a nach unten versetzt).

Der erste Verbindungsabschnitt 1100 ist in der Variante aus Figur 3a beispielhaft ausgebildet, unmittelbar mit einem Kühlschlauch 40 des elektrischen Ladekabels 100 verbunden zu werden, wie dies in Bezug auf Figuren 2b und 2c beschrieben wurde. Wie beschrieben, kann auf diese Weise eine unmittelbare Verbindung zwischen dem Verbindungsabschnitt 1100 und dem Kühlschlauch 40 hergestellt werden. Wie in Bezug auf Figur 2c beschrieben, kann der Kühlschlauch 40 einen Abschnitt des Verbindungsabschnitts 1100 umgeben oder der Verbindungsabschnitt 1100 kann einen Abschnitt des ersten Kühlschlauchs 40 umgeben.

Der erste Verbindungsabschnitt 1100 weist mindestens einen Dichtabschnitt 1120 auf. Der Dichtabschnitt 1120 verläuft in der zweiten Variante gemäß Figur 3a beispielhaft vollumfänglich um den ersten Verbindungsabschnitt 1100. In dem gezeigten Beispiel ist der Dichtabschnitt 1120 beispielhaft ringförmig ausgestaltet. Auch in Bezug auf Figur 3a sind die in Bezug auf Figur 2a beschriebenen Varianten für den Dichtabschnitt 1120 realisierbar. Der Dichtabschnitt 1120 führt zu einer zumindest weitestgehend oder nahezu fluiddichten Verbindung zwischen dem ersten Verbindungsabschnitt 1100 und dem ersten Kühlschlauch 40.

Wie in Bezug auf Figur 2b beschrieben, kann der erste Verbindungsabschnitt 1100 in den Kühlschlauch 40 eingebracht, z. B. eingeschoben oder eingeführt, werden, oder es kann der erste Kühlschlauch 40 auf den ersten Verbindungsabschnitt 1100 aufgebracht, z. B. aufgeschoben oder aufgesteckt, werden.

Der genau eine Kupplungsabschnitt 1200 steht von dem ersten Verbindungsabschnitt 1100 entlang der Längsachse L vor. Bei einer Verbindung des ersten Kühlschlauchs 40 mit dem ersten Verbindungsabschnitt 1100 ist der Kupplungsabschnitt 1200 zumindest abschnittsweise in dem ersten Kühlschlauch 40 aufgenommen; der Kupplungsabschnitt 1200 ragt in den ersten Kühlschlauch 40 hinein. Der Kupplungsabschnitt 1200 erstreckt sich zumindest nahezu parallel zu dem ersten Verbindungsabschnitt 1100 entlang der Längsachse L. Der Kupplungsabschnitt 1200 kann mit einem in Bezug auf Figur 2b beschriebenen Schlauchelement 1400 verbunden oder gekoppelt werden. Dieses Schlauchelement 1400 hat, ebenso wie der Kupplungsabschnitt 1200, einen kleineren Durchmesser und Umfang als der Kühlschlauch 40.

Das Schlauchelement 1400 kann auf den einen Kupplungsabschnitt 1200 aufgebracht sein/werden. Auf diese Weise wird der Kupplungsabschnitt 1200 mit dem Schlauchelement 1400 verbunden. In diesem Fall umgibt das Schlauchelement 1400 zumindest einen Abschnitt des Kupplungsabschnitts 1200. Alternativ kann das Schlauchelement 1400 in den Kupplungsabschnitt 1200 eingebracht werden. In diesem Fall kann der Kupplungsabschnitt 1200 einen Abschnitt des Schlauchelements 1400 umgeben. Zudem weist der Kupplungsabschnitt 1200 einen Dichtabschnitt 1220 auf, der entsprechend dem Dichtabschnitt 1120 ausgebildet sein kann. Dadurch wird zwischen dem Kupplungsabschnitt 1200 und dem Schlauchelement 1400 eine fluiddichte Verbindung gebildet. Ein solcher Dichtabschnitt kann auch auf den Kupplungsabschnitten der Variante aus Figuren 2a bis 2c angeordnet sein.

In einem verbundenen Zustand ragt das Schlauchelement 1400, wie in Bezug auf Figur 2c beschrieben, ausgehend von dem Kupplungsabschnitt 1200 in Richtung der Längsachse L in den ersten Kühlschlauch 40 hinein. Das Schlauchelement 1400 ist zumindest abschnittsweise in dem Kühlschlauch 40 aufgenommen. Somit besteht eine Fluidverbindung zwischen dem Kühlschlauch 40 und dem Schlauchelement 1400 und zwischen dem Kühlschlauch 40 und dem Verbindungsabschnitt 1100.

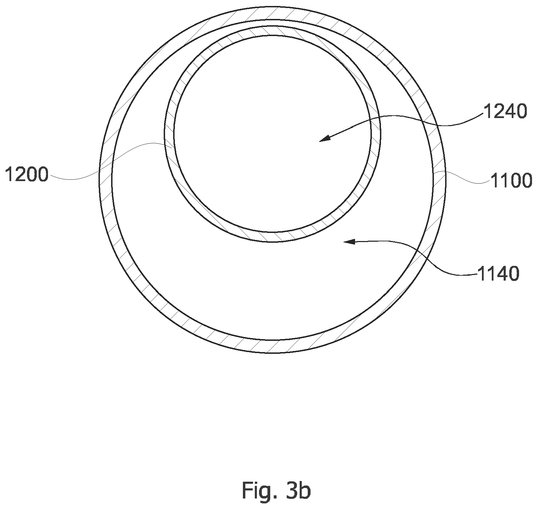

Fließt in dem ersten Kühlschlauch 40 ein Kühlmedium in Richtung der Anschlussvorrichtung 1000, strömt ein Teil des Kühlmediums durch das Schlauchelement 1400 in den Kupplungsabschnitt 1200 und dadurch in die Anschlussvorrichtung 1000 selbst. Zudem strömt ein anderer Teil des Kühlmediums von dem Kühlschlauch 40 durch den Verbindungsabschnitt 1100 in die Anschlussvorrichtung 1000 selbst. Sind die Querschnittsfläche 1140 des ersten Verbindungsabschnitts 1100 abzüglich der Querschnittsfläche 1240 des Kupplungsabschnitts 1200 und die Querschnittsfläche 1240 des Kupplungsabschnitts 1200, wie in Figur 3b illustriert, zumindest nahezu identisch, strömt eine zumindest nahezu identische Menge an Kühlmedium in den Kupplungsabschnitt 1200 und den Verbindungsabschnitt 1100. Zudem kommt es zu keinem Stau an Kühlmedium (z. B. Fluidstau), da die Querschnittsfläche des Kühlschlauchs 40 zumindest nahezu mit der Querschnittsfläche 1140 des Verbindungsabschnitts 1100 übereinstimmt und dadurch das Kühlmedium aus dem Kühlschlauch 40 vollständig in den Verbindungsabschnitt 1100 und den Kupplungsabschnitt 1200 strömen kann.

Fließt ein Kühlmedium in Richtung des Kühlschlauchs 40, strömt ein Teil des Kühlmediums durch den Kupplungsabschnitt 1200 in das Schlauchelement 1400 und dadurch in den Kühlschlauch 40. Zudem strömt ein anderer Teil des Kühlmediums durch den Verbindungsabschnitt 1100 in den Kühlschlauch 40. Sind die Querschnittsfläche des 1140 des Verbindungsabschnitts 1100 abzüglich der Querschnittsfläche 1240 des Kupplungsabschnitts 1200 und die Querschnittsfläche 1240 des Kupplungsabschnitts 1200, wie in Figur 3b illustriert, zumindest nahezu identisch, kann über die Zeit eine zumindest nahezu identische Menge an Kühlmedium über den Kupplungsabschnitt 1200 und den Verbindungsabschnitt 1100 in den Kühlschlauch 40 strömen.

Die Anschlussvorrichtung 1000 weist ferner beispielhaft einen Hauptabschnitt 1300 auf. In der gezeigten Variante erstreckt sich der erste Verbindungsabschnitt 1100 von einer ersten Seite des Hauptabschnitts 1300 in die erste Richtung entlang der Längsachse L. Anders ausgedrückt, der Hauptabschnitt 1300 liegt, ausgehend von dem Verbindungsabschnitt 1100, auf einer von dem Kupplungsabschnitt 1200 abgewandten Seite. In dem Beispiel aus Figuren 3a hat der Hauptabschnitt 1300 beispielhaft eine größere Dimension als der Verbindungsabschnitt 1100. Andere Ausgestaltungen sind denkbar und realisierbar.

Wie in Figur 3a zu erkennen, ist beispielhaft auf einer zweiten Seite des Hauptabschnitts 1300 ein zweiter Verbindungabschnitt 1320 ausgebildet. Ferner ist beispielhaft ein weiterer zweiter Verbindungsabschnitt 1320 (nicht zu erkennen in Figur 3a) auf einer der Seite des gezeigten zweiten Verbindungsabschnitts 1320 gegenüberliegenden Seite (Unterseite) des Hauptabschnitts 1300 angeordnet. In dem Beispiel aus Figur 2a sind genau zwei Verbindungsabschnitte 1320 vorgesehen. Einer der zweiten Verbindungsabschnitte 1320 befindet sich beispielhaft auf der Oberseite und der andere der zweiten Verbindungsabschnitte 1320 befindet sich beispielhaft auf der gegenüberliegenden Unterseite. Beide Seiten sind somit benachbart zu der Seite des Hauptabschnitts 1300, an dem der Verbindungsabschnitt 1100 angeordnet ist. In dem Beispiel aus Figur 3a ist der zu erkennende zweite Verbindungsabschnitt 1320 abschnittsweise trichterförmig ausgebildet. Der nicht zu erkennende zweite Verbindungsabschnitt 1320 kann ebenso abschnittsweise trichterförmig ausgebildet sein. Gemäß einer nicht gezeigten Alternative können der erste Verbindungsabschnitt 1100, der Kupplungsabschnitt 1200 und die zweiten Verbindungsabschnitte 1320 auf einer gleichen Seite ausgebildet sein.

Einer der zwei zweiten Verbindungsabschnitte 1320 ist auf einer Seite mit dem Kupplungsabschnitt 1200 verbunden und ein anderer der zwei Verbindungsabschnitte ist auf einer Seite mit dem ersten Verbindungsabschnitt 1100 verbunden. Im einfachsten Fall verläuft ausgehend von dem Kupplungsabschnitten 1200 und dem ersten Verbindungsabschnitt 1100 jeweils eine rohrförmige Ausnehmung in L-Form durch den Verbindungsabschnitt 1100 und den Hauptabschnitt 1300 zu den zweiten Verbindungsabschnitten 1320. Andere Verbindungsformen sind denkbar und realisierbar.

Die zweiten Verbindungsabschnitte 1320 können mit mindestens einem zweiten Kühlschlauch 20 verbunden sein/werden. Die Verbindung ist beispielhaft eine mittelbare Verbindung, bei welcher der mindestens eine zweite Kühlschlauch 20 über ein Verbindungsstück mit den zwei zweiten Verbindungsabschnitten 1320 verbunden wird. Insbesondere können zwei zweite Kühlschläuche 20 eines elektrischen Ladekabels 100 über ein solches Verbindungsstück mit den zwei Verbindungsabschnitten 1320 verbunden sein/werden. Dabei wird einer der zwei zweiten Kühlschläuche 20 mit einem der zwei Verbindungsabschnitte 1320 verbunden und wird ein anderer der zwei zweiten Kühlschläuche 20 mit einem anderen der zwei Verbindungsabschnitte 1320 verbunden. Auf diese Weise kommt es zu einer mittelbaren Verbindung zwischen den zwei zweiten Kühlschläuchen 20 und der Anschlussvorrichtung 1000 und über die Anschlussvorrichtung 1000 zu dem ersten Kühlschlauch 40.

Fließt in dem Kühlschlauch 40 ein Kühlmedium in Richtung der Anschlussvorrichtung 1000, strömt ein Teil des Kühlmediums durch das Schlauchelement 1400 in den Kupplungsabschnitt 1200 und dadurch in die Anschlussvorrichtung 1000 selbst und von dort, über einen der zwei zweiten Verbindungsabschnitte 1320 und das Verbindungsstück, in einen der zwei zweiten Kühlschläuche 20. Ein anderer Teil des Kühlmediums strömt durch den Verbindungsabschnitt 1100 zu dem anderen der zwei zweiten Verbindungsabschnitte 1320 und von dort in den anderen der zweiten Kühlschläuche 20. Dadurch wird über die Anschlussvorrichtung 1000 eine Verbindung zwischen dem ersten Kühlschlauch 40 und den zwei zweiten Kühlschläuchen 20 hergestellt. Fließt in den zwei zweiten Kühlschläuchen 20 ein Kühlmedium in Richtung der Anschlussvorrichtung 1000, strömt ein Teil des Kühlmediums über einen der zweiten Verbindungsabschnitte 1320 durch den Hauptabschnitt 1300 und den Verbindungsabschnitt 1100 in den Kupplungsabschnitt 1200 und von dort über das Schlauchelement 1400 in den ersten Kühlschlauch 40. Ein anderer Teil des Kühlmediums strömt über den anderen der zweiten Verbindungsabschnitte 1320 zu dem ersten Verbindungsabschnitt 1100 und von dort direkt in den ersten Kühlschlauch 40.

Über die Anschlussvorrichtung 1000 wird somit eine Fluidverbindung zwischen dem ersten Kühlschlauch 40 und den zwei zweiten Kühlschläuchen 20 hergestellt.

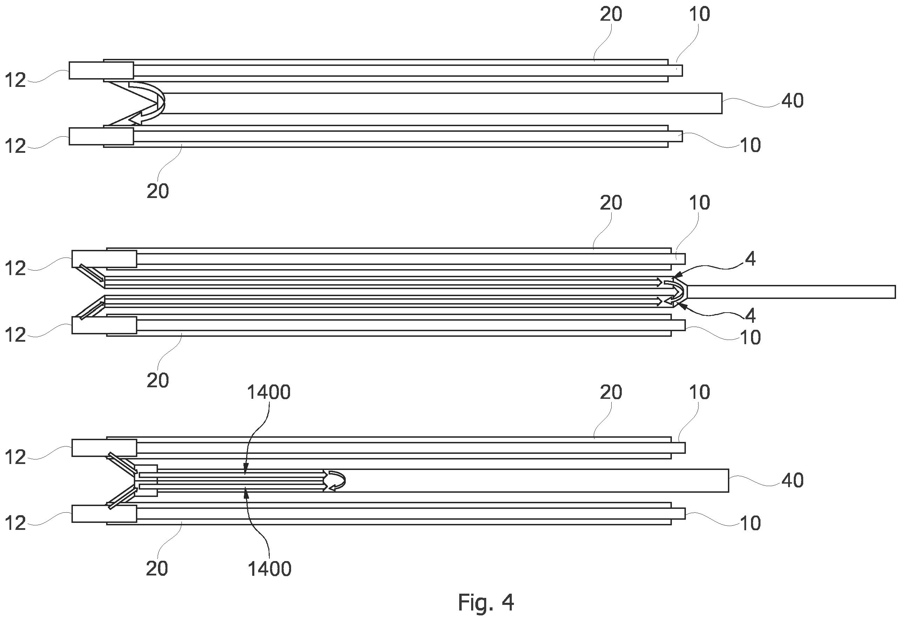

Eine Funktionsweise und Vorteile des elektrischen Ladekabels 100 mit einer Anschlussvorrichtung 100 wird nun in Bezug auf Figur 4 beschrieben und mit bekannten Ladekabeln ohne eine solche Anschlussvorrichtung verglichen.

Die mittlere Zeichnung in Figur 4 zeigt eine bekannte Ausgestaltung eines elektrischen Ladekabels mit vier Kühlschläuchen. Zwei Kühlschläuche 4 weisen keinen elektrischen Leiter auf. Zwei Kühlschläuche 20 weisen einen elektrischen Leiter 10 auf.

Gemäß einem ersten Beispiel sind die zwei Kühlschläuche 4 jeweils als ein Vorlauf ausgebildet. Gemäß diesem ersten Beispiel sind die zwei Kühlschläuche 20 jeweils als ein Rücklauf ausgebildet.

Gemäß einem zweiten Beispiel sind die zwei Kühlschläuche 4 jeweils als ein Rücklauf ausgebildet. Gemäß diesem zweiten Beispiel sind die zwei Kühlschläuche 20 jeweils als ein Vorlauf ausgebildet.

Vorteilhaft an dieser Ausgestaltung ist, dass der Abstand zwischen elektrisch leitfähigen Elementen (hier in einem Stecker angeordnete zwei Kontaktelementen 12 zur Kontaktierung der elektrischen Leiter 10) groß ist. Dieser Abstand wird auch als Isolationsstrecke bezeichnet. Die Isolationsstrecke führt von einem Kontaktelement 12 über die komplette Länge eines Kühlschlauchs 4 und eine weitere komplette Länge des Kühlschlauchs 4 zu einem weiteren Kontaktelement 12. Nachteilig an dieser Ausgestaltung ist, dass vier Kühlschläuche benötigt werden, was wiederum den Materialaufwand und die Komplexität des Ladekabels erhöht.

Anders ausgedrückt, es existieren vier Kühlschläuche, zwei davon als Vorlauf und zwei davon als Rücklauf. Ferner weisen zwei Kühlschläuche direkt gekühlte elektrische Leiter auf und können als Powertubes mit direkter Kühlung der Leiter 10 bezeichnet werden. Aufgrund eines Y-Stücks als Verbindungsstück der Kühlschläuche 4 in einer Ladesäule existiert eine sehr lange Isolationsstrecke zwischen den beiden Potentialen (Isolationsstrecke = 2x Leitungslänge).

Die obere Zeichnung in Figur 4 zeigt eine bekannte Ausgestaltung eines elektrischen Ladekabels mit drei Kühlschläuchen. Ein Kühlschlauch 40 weist keinen elektrischen Leiter auf. Zwei Kühlschläuche 20 weisen einen elektrischen Leiter 10 auf.

Gemäß einem ersten Beispiel ist der Kühlschlauch 40 als ein Vorlauf ausgebildet. Gemäß diesem ersten Beispiel sind die zwei Kühlschläuche 20 jeweils als ein Rücklauf ausgebildet.

Gemäß einem zweiten Beispiel ist der Kühlschlauch 40 als ein Rücklauf ausgebildet. Gemäß diesem zweiten Beispiel sind die zwei Kühlschläuche 20 jeweils als ein Vorlauf ausgebildet.

Nachteilig an dieser Ausgestaltung ist, dass der Abstand zwischen elektrisch leitfähigen Elementen (hier den zwei Kontaktelementen 12 in einem Stecker) klein ist. Dieser Abstand wird auch als Isolationsstrecke bezeichnet. Die Isolationsstrecke führt von einem Kontaktelement 12 über ein Anschlussstück unmittelbar zu einem weiteren Kontaktelement 12. Vorteilhaft an dieser Ausgestaltung ist, dass nur drei Kühlschläuche benötigt werden, was wiederum den Materialaufwand und die Komplexität des Ladekabels verringert.

Anders ausgedrückt, das Ladekabel hat drei Kühlschläuche, von denen einer als Vorlauf oder Rücklauf ausgebildet ist und von denen zwei einen direkt gekühlten elektrischen Leiter 10 aufweisen und somit als zwei Powertubes mit direkter Kühlung der Leiter 10 bezeichnet werden können. Aufgrund eines Y-Stücks in dem Stecker existiert eine sehr kurze Isolationsstrecke zwischen den beiden Potentialen.

Die untere Zeichnung in Figur 4 zeigt ein Ausgestaltung eines elektrischen Ladekabels 100 mit drei Kühlschläuchen aus Figuren 1a oder 1b mit einer hierin beschriebenen Anschlussvorrichtung 1000. Rein beispielhaft ist die Anschlussvorrichtung 1000 als erste Variante gemäß Figuren 2a bis 2c ausgebildet. Eine Ausgestaltung gemäß Figuren 3a und 3b ist ebenso denkbar und realisierbar. Ein erster Kühlschlauch 40 weist keinen elektrischen Leiter auf. Zwei zweite Kühlschläuche 20 weisen einen elektrischen Leiter 10 auf. Auch rein beispielhaft ist die Anschlussvorrichtung 1000 mittelbar über ein Verbindungsstück mit den zwei Kühlschläuchen 20 verbunden. Eine unmittelbare Verbindung der Anschlussvorrichtung 1000 und der zwei Kühlschläuche 20 ist möglich.

Gemäß einem ersten Beispiel ist der Kühlschlauch 40 als ein Vorlauf ausgebildet. Gemäß diesem ersten Beispiel sind die zwei Kühlschläuche 20 jeweils als ein Rücklauf ausgebildet.

Somit fließt ein Kühlmedium durch den Kühlschlauch 40 in Richtung der Anschlussvorrichtung 1000. Das Kühlmedium strömt in die zwei Schlauchelemente 1400, die jeweils in den Kühlschlauch 40 hineinragen. Über die zwei Schlauchelemente 1400 strömt das Kühlmedium, wie beschrieben, über die Kupplungsabschnitte 1200, die Verbindungsabschnitte 1100 und den Hauptabschnitt 1300 in die zweiten Verbindungsabschnitte 1320 und von dort über ein Verbindungsstück zu den beiden Kontaktelementen 12 in dem Stecker. Von dort wird das Kühlmedium jeweils über die Kühlschläuche 20 zurückgeführt.

Gemäß einem zweiten Beispiel ist der Kühlschlauch 40 als ein Rücklauf ausgebildet. Gemäß diesem zweiten Beispiel sind die zwei Kühlschläuche 20 jeweils als ein Vorlauf ausgebildet.

Somit fließt ein Kühlmedium durch die zwei Kühlschläuche 20 in Richtung der Anschlussvorrichtung 1000. Das Kühlmedium passiert zunächst die Kontaktelemente 12 in dem Stecker und fließt über das Verbindungsstück in die zwei zweiten Verbindungsabschnitte 1320, durch den Hauptabschnitt 1300, den Verbindungsabschnitt 1100 und die zwei Kupplungsabschnitte 1200 in die zwei Schlauchelemente 1400, die jeweils in den Kühlschlauch 40 hineinragen. Über die zwei Schlauchelemente 1400 gelangt das Kühlmedium in den Kühlschlauch 40 und wird von dort über den Kühlschlauch 40 zurückgeführt.

Vorteilhaft an dieser Ausgestaltung ist, dass der Abstand (die Isolationsstrecke) zwischen elektrisch leitfähigen Elementen (hier den zwei Kontaktelementen 12 in dem Stecker) groß ist und jedenfalls gegenüber der Ausgestaltung mit drei Kühlschläuchen ohne Anschlussvorrichtung gemäß der in Figur 4 oben gezeigten Variante (deutlich) vergrößert ist. Die Isolationsstrecke führt von einem Kontaktelement 12 in dem Stecker über die komplette Länge eines Schlauchelements 1400 und eine weitere komplette Länge eines Schlauchelements 1400 zu einem weiteren Kontaktelement 12 in dem Stecker. Ebenso vorteilhaft an dieser Ausgestaltung ist, dass nur drei Kühlschläuche benötigt werden, was wiederum den Materialaufwand und die Komplexität des Ladekabels 1000 verringert.

Anders ausgedrückt wird damit eine Ausgestaltung mit drei Kühlschläuchen bereitgestellt, von denen einer als ein Vorlauf oder Rücklauf ausgebildet ist und von denen zwei einen direkt gekühlten elektrischen Leiter 10 aufweisen und somit als Powertubes mit direkter Kühlung bezeichnet werden können. Die Isolationsstrecke kann je nach Anforderung (Systemspannung und Leitfähigkeit des Kühlmediums/Kühlfluides) angepasst werden, indem die Schlauchlänge der Anschlussvorrichtung, welche in den Kühlschlauch 20 hineinragt, angepasst wird.

Ein weiterer Vorteil ist, dass der Systemdruck kleiner ist als bei elektrischen Ladekabeln mit vier Kühlschläuchen, da ein großer Teil z. B. des Vorlaufs (oder Rücklaufs) als großer Gesamtschlauch ausgeführt sein kann. Eine Trennung in zwei Teile des Vorlaufs bzw. Rücklaufs für Gleichstrom (DC+/DC-) ist erst durch eine Volumemstromaufteilung in die zwei Teilschläuche vorgesehen.

Die Anschlussvorrichtung 1000 kann in einfacher Form als eine Art Schlauchnippel gebildet werden, welcher den Vorlauf/Rücklaufschlauch abdichtet und im Inneren des Schlauches zwei weitere Schlauchanschlüsse aufweist (siehe Figur 2a), welche kleine Schläuche aufnehmen können, welche in das Innere eines größeren Hauptschlauches 40 hineinragen können. Durch die Länge der beiden Schläuche (Schlauchelemente 1400) kann die Isolationsstrecke eingestellt werden. Weiterer Vorteil ist der Knickschutz des Hauptschlauches 40 durch innenliegende Schläuche (Schlauchelemente 1400) im kritischen Bereich kurz nach der Zugentlastung im Stecker und des Steckerausgangs.

In einer weiteren Ausgestaltungsvariante (siehe Figur 3a) kann die Anschlussvorrichtung 1000 nur eine Schlauchkupplung für einen kleinen Schlauch (Schlauchelement 1400) vorsehen. Die Separierung des Volumenstromes in zwei Teilvolumenströme wird durch den einen Schlauch (Schlauchelement 1400) und den darum befindlichen Ringspalt (Verbindungsabschnitt 1100) realisiert. Vorteil dieser Lösung ist die effizientere Nutzung des Hauptschlauches 40, was sich wiederum in einem optimierten Druckbedarf zeigt. Hierbei kann die flüssigkeitsführende Querschnittsfläche des Innenschlauches genau so groß sein wie die Querschnittsfläche des umgebenden Ringspaltes, um symmetrische Druckverhältnisse zu realisieren.

In beiden Varianten kann die Anschlussvorrichtung direkt in das Kontaktkühlsystem des Steckers integriert werden. Eine Ausgestaltung als ein Formteil, welches im Stecker die Kontaktaufnahme, Kontaktkühlung, Abdichtung und Anbindung an die Vor/Rücklauf-Schläuche realisiert, ist ebenfalls denkbar.

## Patentansprüche

1. Anschlussvorrichtung (1000) für ein elektrisches Ladekabel (100), beispielsweise für Elektrofahrzeuge, aufweisend:
einen ersten Verbindungsabschnitt (1100) zur, insbesondere unmittelbaren und/oder fluiddichten, Verbindung mit einem ersten Kühlschlauch (40) des elektrischen Ladekabels (100); und
mindestens einen von dem ersten Verbindungsabschnitt (1100) in einer ersten Richtung vorstehenden Kupplungsabschnitt (1200), wobei der mindestens eine Kupplungsabschnitt (1200) ausgebildet ist, in dem ersten Kühlschlauch (40) zumindest abschnittsweise aufgenommen zu werden, insbesondere in den ersten Kühlschlauch (40) hineinzuragen.

2. Anschlussvorrichtung (1000) nach Anspruch 1, wobei die Anschlussvorrichtung (1000) aus einem nicht leitfähigen Material, insbesondere aus einem nicht leitfähigen Kunststoff, gebildet oder gefertigt ist.

3. Anschlussvorrichtung (1000) nach Anspruch 1 oder 2, wobei der mindestens eine Kupplungsabschnitt (1200) ausgebildet ist,
mit mindestens einem Schlauchelement (1400) verbunden oder gekoppelt zu sein oder zu werden, oder
mit mindestens einem Schlauchelement (1400) integral oder einstückig gebildet oder verbunden zu sein oder zu werden,
wobei das mindestens eine Schlauchelement (1400) ausgebildet ist, in dem ersten Kühlschlauch (40) zumindest abschnittsweise aufgenommen zu werden, insbesondere in den ersten Kühlschlauch (40) hineinzuragen.

4. Anschlussvorrichtung (1000) nach einem der Ansprüche 1 bis 3, wobei der erste Verbindungsabschnitt (1100) mindestens einen, insbesondere umfänglich verlaufenden, Dichtabschnitt (1120) aufweist.

5. Anschlussvorrichtung (1000) nach einem der Ansprüche 1 bis 4, wobei die Anschlussvorrichtung (1000) ferner einen Hauptabschnitt (1300) aufweist, wobei der erste Verbindungsabschnitt (1100) von einer ersten Seite des Hauptabschnitts (1300) in die erste Richtung vorsteht.

6. Anschlussvorrichtung (1000) nach einem der Ansprüche 1 bis 5, wobei die Anschlussvorrichtung (1000) mindestens einen zweiten Verbindungsabschnitt (1320) zur Verbindung mit mindestens einem zweiten Kühlschlauch (20) des elektrischen Ladekabels (100) aufweist.

7. Anschlussvorrichtung (1000) nach einem der Ansprüche 1 bis 6, wobei der mindestens eine Kupplungsabschnitt (1200) mit dem mindestens einen zweiten Verbindungsabschnitt (1320) verbunden ist.

8. Anschlussvorrichtung (1000) nach einem der Ansprüche 1 bis 7, wobei als der mindestens eine Kupplungsabschnitt (1200) zwei oder mehr Kupplungsabschnitte (1200) vorgesehen sind und die zwei oder mehr Kupplungsabschnitte (1200):
sich zumindest nahezu parallel zueinander und beabstandet voneinander erstrecken; und/oder.
eine zumindest nahezu gleiche Querschnittsfläche haben.

9. Anschlussvorrichtung (1000) nach einem der Ansprüche 1 bis 7, wobei als der mindestens eine Kupplungsabschnitt (1200) genau ein Kupplungsabschnitt (1200) vorgesehen ist und eine Querschnittsfläche (1240) des genau einen Kupplungsabschnitts (1200) und eine Querschnittsfläche (1140) des ersten Verbindungsabschnitts (1000) abzüglich der Querschnittsfläche (1240) des genau einen Kupplungsabschnitts (1200) sich zumindest nahezu genau entsprechen.

10. Elektrisches Ladekabel (100), beispielsweise für Elektrofahrzeuge, aufweisend:
einen ersten Kühlschlauch (40);
mindestens einen zweiten Kühlschlauch (20), in dem mindestens ein elektrischer Leiter (10) angeordnet ist; und
eine Anschlussvorrichtung (1000) nach einem der Ansprüche 1 bis 9.

11. Elektrisches Ladekabel (100) nach Anspruch 10, wobei die Anschlussvorrichtung (1000):
in das elektrische Ladekabel (100), insbesondere in einen Stecker des elektrischen Ladekabels (100), integriert ist; oder
als ein Formteil in dem elektrischen Ladekabel (100), insbesondere in einem Stecker des elektrischen Ladekabels (100), aufgenommen ist.

12. Elektrisches Ladekabel (100) nach Anspruch 10 oder 11, wobei der erste Kühlschlauch (40) mit dem ersten Verbindungsabschnitt (1100), insbesondere unmittelbar, verbunden, insbesondere auf den ersten Verbindungsabschnitt (1100) aufgebracht, ist.

13. Elektrisches Ladekabel (100) nach einem der Ansprüche 10 bis 12, wobei das mindestens eine Schlauchelement (1400) mit dem mindestens einen Kupplungsabschnitt (1200)
gekoppelt oder verbunden ist, oder
integral oder einstückig gebildet oder verbunden ist,
wobei das mindestens eine Schlauchelement (1400) in den ersten Kühlschlauch (40) hineinragt.

14. Elektrisches Ladekabel (100) nach einem der Ansprüche 10 bis 13, wobei der mindestens eine zweite Kühlschlauch (20) mit dem mindestens einen zweiten Verbindungsabschnitt (1320) verbunden ist.

15. Elektrisches Ladekabel (100) nach einem der Ansprüche 10 bis 14, wobei in dem ersten Kühlschlauch (40) kein elektrischer Leiter angeordnet ist und/oder wobei der erste Kühlschlauch (40) als ein Vorlauf für ein Kühlmedium (30) ausgebildet ist; und/oder
wobei der mindestens eine zweite Kühlschlauch (20) als ein Rücklauf für ein Kühlmedium (30) ausgebildet ist.
